# EUROPEAN PATENT APPLICATION

(11) **EP 3 496 074 A1**
(43) Date of publication of application: **12.06.2019**
(21) Application number: 17836991.4
(22) Date of filing: 02.08.2017
(51) Int. Cl.: G09B 23/32, G09B 9/00

(54) **MEDICAL SIMULATOR**

(30) Priority: 03.08.2016 JP 2016152592; 26.01.2017 JP 2017011748
(71) Applicant: Micoto Technology Inc., Yonago-shi, Tottori 683-0845 (JP)
(72) Inventor: NAKANO, Toshiya, Yonago-shi Tottori 683-8503 (JP); SHIMIZU, Masaki, Munakata-shi Fukuoka 811-3502 (JP); HIYAMA, Yasuaki, Yonago-shi Tottori 683-0845 (JP); MATSUOKA, Masaaki, Yonago-shi Tottori 683-0845 (JP); NAKAMURA, Hiroshige, Yonago-shi Tottori 683-8503 (JP); TAKEUCHI, Hiromi, Yonago-shi Tottori 683-8503 (JP); INAGAKI, Yoshimi, Yonago-shi Tottori 683-8503 (JP)
(74) Representative: Gill Jennings & Every LLP
(86) International application number: PCT/JP2017/027963
(87) International publication number: WO 2018/025888

(57) **Abstract**

A medical simulator has a human body model that simulates a human-body external shape at least from a head to a neck, an oral cavity portion, a nasal cavity portion, a pharynx portion, a larynx portion, a trachea portion, and an esophagus portion, thereby enabling at least training of an intubation procedure to be done. The medical simulator includes: a neck supporting portion that serves as a framework of the neck of the human body model and is provided so as to extend to the head; and a simulated thyroid cartilage portion that is connected by a first spring member to the neck supporting portion and is disposed in the larynx portion of the human body model. The esophagus portion of the human body model includes of a tubular member having flexibility. The trachea portion of the human body model includes a tubular member having flexibility. The simulated thyroid cartilage portion is made of a material harder than that of the tubular member, and has, inside thereof, an esophagus passageway portion into which the tubular member of the esophagus portion is inserted and a trachea passageway portion into which the tubular member of the trachea portion is inserted.

## Description

### TECHNICAL FIELD

The present invention relates to a medical simulator, and in particular, relates to a simulator that enables a training, for example, for an intubation procedure to be done.

### BACKGROUND ART

In recent years, medicine has been advancing, and medical techniques have been more sophisticated. These situations lead to an increase in demand for medical practitioners having higher skills, which also leads to a demand for improved education for medical practitioners. In particular, simulation-based education, which employs a model that simulates a living body, has been receiving much attention because it allows the acquisition of skills and the implementation of training that are close to actual practices.

Patent Document 1 described below discloses a simulation model for training of caregivers, which is designed specifically for such simulation-based education. This model includes a manikin and a tube for airway intubation, and the manikin includes: a human-shaped model that simulates the external shape of a human body from the head to the chest; a simulated oral cavity; a simulated nasal cavity; a simulated pharynx portion; a simulated larynx portion; a simulated trachea; a simulated bronchus; and part of a simulated esophagus. It also discloses that a sensing portion is attached at a correct position where a tube is inserted at the time of airway intubation into the simulated trachea or simulated bronchus, and detection means is provided to detect that the top end of the tube reaches the sensing portion. Using this model, nursing care trainees can learn appropriate tube insertion positions at the time of nursing care.

### RELATED ART DOCUMENT

### PATENT DOCUMENT

Patent Document 1: Japanese Patent Application Laid-open No. 2015-18152

### SUMMARY OF THE INVENTION

### PROBLEM TO BE SOLVED BY THE INVENTION

However, such an existing simulation model as the model disclosed in Patent Document 1 described above is not able to faithfully reproduce actual body states of a patient in the medical field. For example, at the time of tracheal intubation or endoscopy, the lingual radix may move backward, or nausea sounds may take place, or swallowing reflex or coughing may happen. In addition, the body state of a patient varies depending on whether the patient is under anesthesia.

With models that only simulate body portions, only limited training can be done, and hence, it is difficult to provide practical training that is close to actual practices.

The present invention has been made in view of the situation described above, and provide a medical simulator that allows a highly precise training of medical procedures including an intubation procedure that is close to actual practices.

### MEANS FOR SOLVING THE PROBLEMS

A medical simulator according to one aspect of the present invention employs the following configuration to solve the problem described above.

In other words, the medical simulator according to the one aspect enables at least training of an intubation procedure to be done, and has a human body model that simulates a human-body external shape at least from a head to a neck, an oral cavity portion, a nasal cavity portion, a pharynx portion, a larynx portion, a trachea portion, and an esophagus portion. In addition, this medical simulator includes: a neck supporting portion that serves as a framework of the neck of the human body model and is provided so as to extend to the head; and a simulated thyroid cartilage portion that is connected by a first spring member to the neck supporting portion and is disposed in the larynx portion of the human body model. The esophagus portion of the human body model includes a tubular member having flexibility, and the trachea portion of the human body model includes a tubular member having flexibility. The simulated thyroid cartilage portion is made of a material harder than that of the tubular member, and has, inside thereof, an esophagus passageway portion into which the tubular member of the esophagus portion is inserted, and a trachea passageway portion into which the tubular member of the trachea portion is inserted.

### EFFECT OF THE INVENTION

Thus, according to the present invention, it is possible to provide a medical simulator that makes it possible to do a highly precise training that is close to actual practices on medical procedures such as an intubation procedure. Here, the term "intubation procedure" means a medical activity such as tracheal intubation, an endoscope, and sputum suction in which some kind of tube is inserted into a body, and is not limited to a particular procedure.

### BRIEF DESCRIPTION OF THE DRAWINGS

Fig. 1 is a diagram illustrating the external appearance of a medical simulator according to a first exemplary embodiment;
Fig. 2 is a side view illustrating part of the framework structure of a human body model;
Fig. 3 is a rear view of part of the framework structure of the human body model;
Fig. 4 is a sectional schematic view illustrating the human body model;
Fig. 5A is a diagram illustrating the external appearance of a nose portion and a mouth portion of the human body model;
Fig. 5B is a diagram illustrating the structure of the lower lip and its surroundings of the human body model;
Fig. 6 is a diagram illustrating an oral cavity portion in a state where the mouth is opened;
Fig. 7 is a schematic view illustrating movement of the human body model that simulates the state under anesthesia where the airway and the food passageway are narrowed;
Fig. 8 is a schematic view illustrating movement of the human body model at the time of swallowing reflex;
Fig. 9 is a diagram schematically illustrating the configuration of the medical simulator according to the first exemplary embodiment in terms of control of the human body model;
Fig. 10 is a side view illustrating a simulated thyroid cartilage portion provided in the framework of the human body model according to a second exemplary embodiment;
Fig. 11 is a diagram illustrating the simulated thyroid cartilage portion as viewed from above;
Fig. 12 is an exploded view illustrating the simulated thyroid cartilage portion;
Fig. 13 is a diagram schematically illustrating motion of the simulated thyroid cartilage portion; and
Fig. 14 is a sectional schematic view illustrating the structure of the nasal cavity portion and its surroundings of the human body model according to the second exemplary embodiment.

### DESCRIPTION OF EMBODIMENTS

Hereinbelow, exemplary embodiments according to the present invention will be described with reference to the drawings. Each of the exemplary embodiments described below is merely an example, and the present invention is not limited to the configurations of the exemplary embodiments described below.

### [First Exemplary Embodiment]

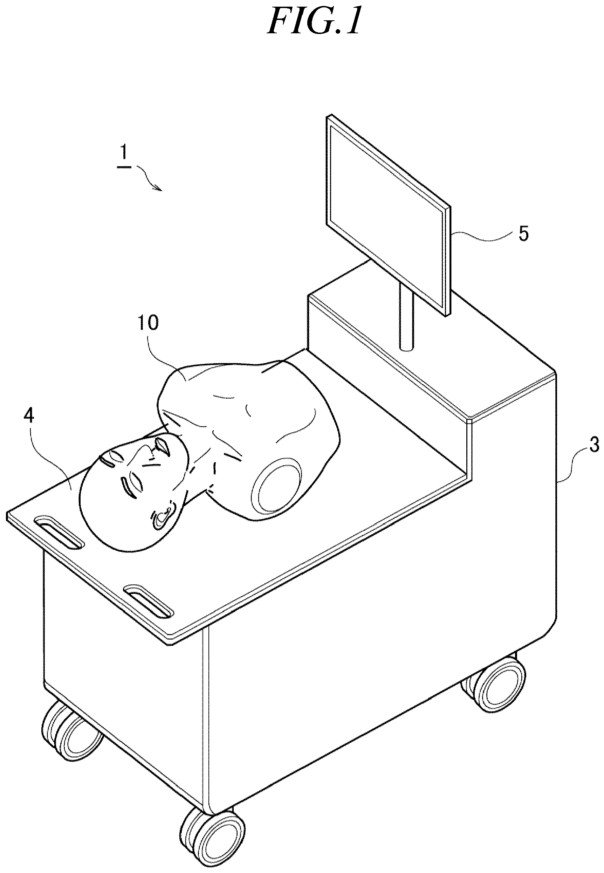

Fig. 1 is a diagram illustrating the external appearance of the medical simulator according to a first exemplary embodiment.

The medical simulator 1 according to the first exemplary embodiment includes, for example, a device mounting table 3, an input-output panel 5, and a human body model 10, and makes it possible to do training for procedures related to intubation such as nasal-and-oral tracheal intubation, nasal-and-oral endoscopy, and sputum suction. However, the medical procedures that can be trained by the medical simulator 1 are not limited to the procedure related to intubation as described above.

The device mounting table 3 is a constituent element on which the human body model 10 is placed, and accommodates, inside thereof, each unit for controlling the human body model 10. More specifically, the device mounting table 3 includes an upper surface having a base portion 4 on which the human body model 10 can be placed, and the inside of the device mounting table 3 is closed by the upper surface and side surfaces. Units accommodated therein include, for example, a power source 6 for actuators such as a compressor, a simulator controlling unit 7, and a speaker 8. It is desirable to set the height of the base portion 4 to the height of a table on which patients lie when a medical procedure serving as the training target is performed in a medical field, and the base portion 4 may be configured so that the height thereof is adjustable.

The input-output panel 5 is disposed on the upper surface of the device mounting table 3. The input-output panel 5 includes a display unit that displays, for example, the training menu, operation modes of the medical simulator 1, details of implementation, and evaluation results, and also includes an input unit for operating the screen displayed on the display unit. In the example in Fig. 1, the input-output panel 5 is a touch screen in which the display unit and the input unit are integrally configured.

In the first exemplary embodiment, no limitation is applied to details displayed on the input-output panel 5. In the first exemplary embodiment, the panel displays, for example: the menu for selecting one of nasal-and-oral tracheal intubation, nasal-and-oral endoscopy, and sputum suction as the procedure to be trained for; the menu for selecting enabling/disabling of biological reactions that correspond to the selected procedure; the menu for selecting whether or not it is under anesthesia; and evaluation results.

The human body model 10 is a human-shaped model to be operated by a person (hereinafter, referred to as a trainee) who receives training, and the human body model 10 is formed so as to simulate the human-body external shape from the head to the belly, the oral cavity portion, the nasal cavity portion, the pharynx portion, the larynx portion, the trachea portion, the esophagus portion, the bronchus portion, and the stomach portion.

Here, the "human-body external shape" means the shape of the external appearance of a human body. In relation to the term "human-body external shape," the shapes of organs such as the oral cavity portion, the nasal cavity portion, the pharynx portion, the larynx portion, the trachea portion, the esophagus portion, the bronchus portion, and the stomach portion are each referred to as an "organ shape."

The human body model 10 is placed on the base portion 4 in a posture corresponding to the procedure to be trained for. For example, at the time of training for tracheal intubation, the human body model 10 is placed on the base portion 4 in a posture in which it lies on its back, whereas, at the time of training for endoscopy, the human body model 10 is placed on the base portion 4 in a posture in which it lies on its side.

In the description of the human body model 10, in order to specify the relative positional relationship of each constituent element that constitutes the human body model 10, the longitudinal direction, the front, the back, and the like are set using anatomical directions of a human body, for the purpose of convenience. More specifically, the direction perpendicular to the frontal plane is referred to as the "anteroposterior direction," the direction perpendicular to the sagittal plane is referred to as the "left-right direction," and the direction perpendicular to the transverse plane (horizontal plane) is referred to as the "craniocaudal direction." In addition, the anterior side of a human body is referred to as the "forward;" the posterior side is referred to as "backward;" the left-hand side is referred to as "left;" the right-hand side is referred to as "right;" the superior side is referred to as "up or above;" and the inferior side is referred to as "down, lower or below."

Furthermore, rotation about an axis in the left-right direction is referred to as "craniocaudal rotation;" rotation about an axis in the anteroposterior direction is referred to as "left-right rotation;" and rotation about an axis of the craniocaudal direction is referred to as "anteroposterior rotation."

As described above, the direction and the like expressed in this specification do not necessarily match the top or bottom in the gravity direction, and do not limit the modes to which the medical simulator according to each of the exemplary embodiments is utilized.

In addition, a surface of the human body surface that is in direct contact with the outside world is referred to as an "external body surface," and the surface of the food passageway extending from the oral cavity to the digestive organ and the surface of the airway from the nasal cavity to the lung are each referred to as an "internal body surface." In addition, the side opposite to the outer side of the "external body surface" or "internal body surface" is referred to as an "inner side" or "inside."

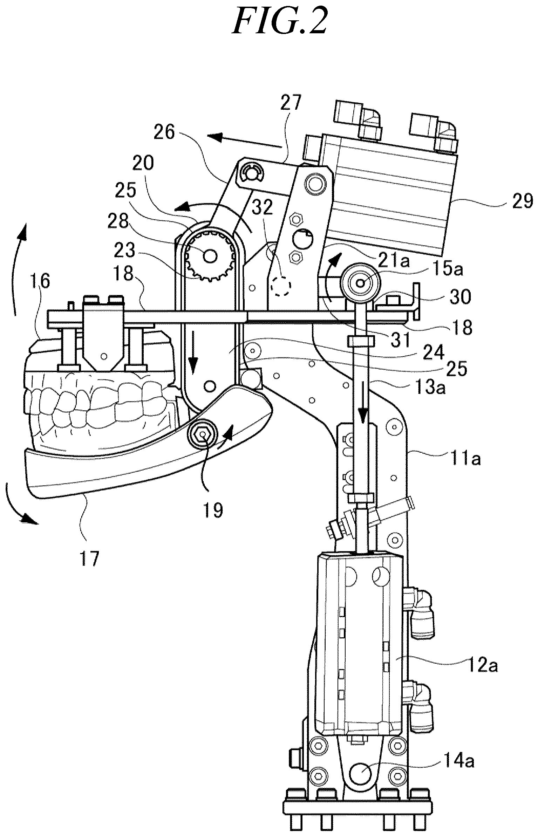

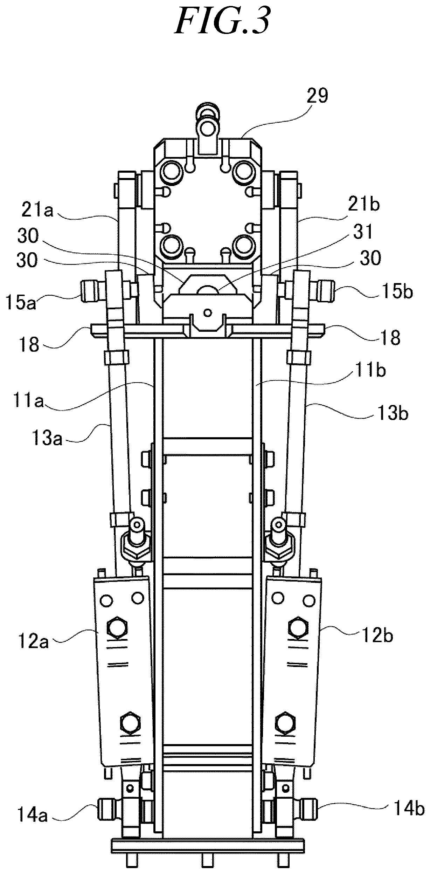

Fig. 2 is a side view illustrating part of the framework structure of the human body model 10. Fig. 3 is a rear view of part of the framework structure of the human body model 10. The side view of Fig. 2 is a diagram illustrating the human body model 10 as viewed in a direction from left toward right. The rear view of Fig. 3 is a diagram illustrating the human body model 10 as viewed from the rear toward the front.

The human body model 10 includes a left neck supporting plate 11a and a right neck supporting plate 11b, which serve as the framework structure of the neck and extend in the craniocaudal direction. The left neck supporting plate 11a and the right neck supporting plate 11b each have a crank shape that bends from the upper forward side toward the lower backward side when viewed from the side.

Furthermore, within the neck of the human body model 10, a left neck cylinder 12a and a right neck cylinder 12b, each of which serves as a second actuator for enabling the head to move, are provided, and a left neck rod 13a and a right neck rod 13b, which reciprocate substantially in the craniocaudal direction with pistons in the left shoulder cylinder 12a and the right shoulder cylinder 12b, are provided. Both of the left neck rod 13a and the right neck rod 13b slide in the craniocaudal direction to cause the head to lean in the craniocaudal direction. In addition, either one of the left neck rod 13a and the right neck rod 13b slides in the craniocaudal direction to cause the head to tilt to a side.

Furthermore, the left shoulder cylinder 12a and the right shoulder cylinder 12b are pivotally supported in the lower portion thereof by a left shoulder supporting shaft 14a or right shoulder supporting shaft 14b provided at the lower end portion (in the vicinity of the lower end) of the left neck supporting plate 11a or right neck supporting plate 11b, so as to be able to perform craniocaudal rotation.

In the first exemplary embodiment, the left shoulder cylinder 12a and the right shoulder cylinder 12b are air cylinders, each of which uses compressed air as the power source. However, rather than the air cylinder, the second actuator used for moving the head may be a hydraulic or electric cylinder, or may be a thing such as a motor that produces rotating power.

The human body model 10 includes, for example, an upper-jaw bone portion 16, a lower-jaw bone portion 17, an upper-jaw supporting plate 18, a lower-jaw supporting plate 20, a left head plate 21a, and a right head plate 21b, each of which forms the framework structure of the head.

The upper-jaw bone portion 16 is provided between a nasal cavity portion and an oral cavity portion.

The upper-jaw supporting plate 18 is formed of a plate-like member that horizontally extends in the anteroposterior direction in a state where the head does not lean. The upper-jaw supporting plate 18 is connected with the upper-jaw bone portion 16, and supports the upper-jaw bone portion 16 from above. In other words, the upper-jaw supporting plate 18 corresponds to an upper-jaw supporting portion.

The lower-jaw bone portion 17 is a dish-shaped member that forms the lower jaw. The lower-jaw bone portion 17 is pivotally supported by the lower-jaw supporting portion 20 at both of the left and right ends of the lower-jaw bone portion 17 and at a position more backward than the center of the lower-jaw bone portion 17 in the anteroposterior direction, and is configured so as to be able to rotate using a lower-jaw supporting shaft 19 as an axis.

The lower-jaw supporting portion 20 is a member that is provided so as to extend in the craniocaudal direction, and has a lower end portion (in the vicinity of the lower end) that supports the lower-jaw bone portion 17 through the lower-jaw supporting shaft 19 so as to be able to perform craniocaudal rotation.

In addition, the lower-jaw supporting portion 20 has a rotating mechanism for rotating the lower-jaw bone portion 17. More specifically, the lower-jaw supporting portion 20 includes a pulley 23, a pulley 24, and a transmission belt 25, which serves as the rotating mechanism of this lower-jaw supporting portion. The pulley 23 is supported by the lower-jaw supporting portion 20 in a state of being able to rotate in conjunction with a pulley supporting shaft 28 disposed at the upper end portion (in the vicinity of the upper end) of the lower-jaw supporting portion 20. The rotating power of the pulley 23 is transmitted by the transmission belt 25 to the pulley 24. The pulley 24 is supported by the lower-jaw supporting portion 20 so as to be able to rotate in conjunction with the supporting shaft provided at the lower end portion (in the vicinity of the lower end) of the lower-jaw supporting portion 20, and is configured so that, in association with the rotation of this supporting shaft, the lower-jaw bone portion 17 together with the lower-jaw supporting shaft 19 rotates.

A lower jaw cylinder 29 is provided as a third actuator that outputs power for rotating the pulley 23 and the lower-jaw bone portion 17.

In the first exemplary embodiment, the lower jaw cylinder 29 is an air cylinder that uses compressed air as the power source. Instead of the air cylinder, however, the third actuator used for rotating the lower-jaw bone portion 17 may be a hydraulic or electric cylinder, or may be a thing such as a motor that produces rotating power.

The power that is output from the lower jaw cylinder 29 is transmitted by a lower jaw rod 27 and the lower jaw link 26 to the pulley 23.

The lower jaw rod 27 reciprocates substantially in the anteroposterior direction with a piston in the lower jaw cylinder 29.

The lower jaw link 26 is pivotally supported by the end portion of the lower jaw rod 27 opposite to the lower jaw cylinder 29 so as to be able to perform craniocaudal rotation, and has the other end portion connected to the pulley supporting shaft 28 provided on the lower-jaw supporting portion 20. With this configuration, as the lower jaw link 26 turns around, the pulley 23 together with the pulley supporting shaft 28 rotates.

The left head plate 21a and the right head plate 21b are each provided so as to extend substantially in the craniocaudal direction, and each have a lower end portion connected to the upper-jaw supporting plate 18. The left head plate 21a and the right head plate 21b may be formed integrally with the upper-jaw supporting plate 18.

In addition, the left head plate 21a and the right head plate 21b are connected at the upper end portions thereof to the lower jaw cylinder 29 in a manner such that the lower jaw cylinder 29 is sandwiched between these head plates from the left and right.

Here, the connection structure between the framework structure of the head and the framework structure of the neck will be described.

The left neck rod 13a and the right neck rod 13b, which are provided in the neck, are each connected at the upper end of each of the rods to the neck link 30 through a left neck supporting shaft 15a or right neck supporting shaft 15b.

The neck link 30 is provided so as to stand on the upper surface of the upper-jaw supporting plate 18, and has a left end portion connected to the left neck supporting shaft 15a and a right end portion connected to the right neck supporting shaft 15b.

Furthermore, the neck link 30 is connected at the center portion thereof in the left-right direction to the first head shaft 31.

The first head shaft 31 is provided so as to extend in the anteroposterior direction, the backward end portion of which is connected to the neck link 30, and the forward end portion of which is connected to a connecting plate (not illustrated) that connects left and right lower-jaw supporting portions 20. In addition, the first head shaft 31 is connected at the center portion thereof in the anteroposterior direction to the left neck supporting plate 11a and the right neck supporting plate 11b through the second head shaft 32.

The second head shaft 32 is provided so as to extend in the left-right direction, and has left and right end portions that are connected to the left neck supporting plate 11a and the right neck supporting plate 11b.

In the case where the length of extension differs between the left neck rod 13a and the right neck rod 13b, the neck link 30, together with the first head shaft 31, performs left-right rotation with the first head shaft 31 being the center. As the neck link 30 performs the left-right rotation, the upper-jaw supporting plate 18 similarly rotates. This rotation is transmitted by the first head shaft 31, and causes the lower-jaw bone portion 17 to similarly rotate.

Furthermore, as the left neck rod 13a and the right neck rod 13b perform a reciprocating motion in the craniocaudal direction, the neck link 30 moves in the craniocaudal direction, and furthermore, the upper-jaw supporting plate 18 performs craniocaudal rotation using the second head shaft 32 as the axis with the connecting portion between the neck link 30 and the upper-jaw supporting plate 18 being the force application point.

As described above, the left neck supporting plate 11a and the right neck supporting plate 11b, which serve as the framework structure of the neck, are connected to the upper-jaw supporting plate 18, which serves as the framework structure of the head, through the first head shaft 31, the second head shaft 32, and the neck link 30. In addition, the left neck rod 13a and the right neck rod 13b, each of which performs a reciprocating motion using power from the left shoulder cylinder 12a or right shoulder cylinder 12b, are connected to the upper-jaw supporting plate 18 through the left neck supporting shaft 15a or right neck supporting shaft 15b and the neck link 30.

With operations of each of the structures described above, the head of the human body model 10 moves in the following manner.

### (Leaning Motion of Head)

Hereinbelow, the "head leans upward" means that the head leans toward a direction in which the jaw moves upward. On the contrary, the "head leans downward" means that the head leans toward a direction in which the jaw is put down. In addition, the "head leans toward the right side" means that the head leans toward a direction in which the right ear moves nearer to the right shoulder. On the contrary, the "head leans toward the left side" means that the head leans in a direction in which the left ear moves nearer to the left shoulder.

In the case where the head leans upward, the left neck rod 13a and the right neck rod 13b slide downward using the power from the left shoulder cylinder 12a and the right shoulder cylinder 12b. At this time, the distance of sliding of the left neck rod 13a and that of the right neck rod 13b are assumed to be substantially equal to each other. In association with this, the left neck supporting shaft 15a and the right neck supporting shaft 15b move downward in conjunction with the left neck rod 13a and the right neck rod 13b, and the upper-jaw supporting plate 18 is pushed downward with the joining portion between the neck link 30 and the upper-jaw supporting plate 18 being the force application point. On the other hand, the neck link 30 is connected to the first head shaft 31 and the first head shaft 31 is configured so as to be able to rotate (swing) with the second head shaft 32 being the axis, which leads to an increase in the angle formed by the left neck rod 13a and the first head shaft 31 and the angle formed by the right neck rod 13b and the first head shaft 31, with the left neck supporting shaft 15a and the right neck supporting shaft 15b, respectively, being the center.

As a result, with the second head shaft 32 being the axis, the upper-jaw supporting plate 18 rotates such that the forward portion thereof moves upward, and the backward portion thereof moves downward. In other words, the head leans upward.

On the contrary, in the case where the head leans downward, the left neck rod 13a and the right neck rod 13b slide upward using the power from the left shoulder cylinder 12a and the right shoulder cylinder 12b. At this time, the distance of sliding of the left neck rod 13a and that of the right neck rod 13b are assumed to be substantially equal to each other. In association with this, the left neck supporting shaft 15a and the right neck supporting shaft 15b move upward in conjunction with the left neck rod 13a and the right neck rod 13b, and the upper-jaw supporting plate 18 is pushed upward with the joining portion between the neck link 30 and the upper-jaw supporting plate 18 being the force application point. At this time, the angle formed by the left neck rod 13a and the first head shaft 31 and the angle formed by the right neck rod 13b and the first head shaft 31, with the left neck supporting shaft 15a and the right neck supporting shaft 15b being the center, decrease.

As a result, with the second head shaft 32 being the axis, the upper-jaw supporting plate 18 rotates such that the forward portion thereof moves downward, and the backward portion thereof moves upward. In other words, the head leans downward.

Furthermore, in the case where the head leans toward the right side, the right neck rod 13b slides downward, the left neck rod 13a slides upward, or both happen at the same time so that the right neck supporting shaft 15b is positioned lower than the left neck supporting shaft 15a. This makes the upper-jaw supporting plate 18 lean so that the right side thereof is lower than the left side thereof. As a result, the head leans toward the right side.

On the contrary, in the case where the head leans toward the left side, the right neck rod 13b slides upward, the left neck rod 13a slides downward, or both happen at the same time so that the left neck supporting shaft 15a is positioned lower than the right neck supporting shaft 15b. This makes the upper-jaw supporting plate 18 lean so that the left side thereof is lower than the right side thereof. As a result, the head leans toward the left side.

The motion of the head as described above can be performed in an automated manner using the power from the left shoulder cylinder 12a and the right shoulder cylinder 12b, as described above.

In addition, the motion of the head described above may be performed (manually) by a user operating the human body model 10. In this case, the energy supplied to the left shoulder cylinder 12a and the right shoulder cylinder 12b is released with control by the simulator controlling portion 7, which will be described below. For example, in the case where the left shoulder cylinder 12a and the right shoulder cylinder 12b are air cylinders, the compressed air is released from the left shoulder cylinder 12a and the right shoulder cylinder 12b. This enables the user to operate the head of the human body model 10 without receiving any interference.

### (Open-close Motion of Mouth)

The lower jaw rod 27 slides forward with the power from the lower jaw cylinder 29 when the mouth is opened. In association with this, the pulley supporting shaft 28, together with the lower jaw link 26, rotates counterclockwise on the paper surface in Fig. 2 with the connecting portion (supporting shaft) between the lower jaw link 26 and the lower jaw rod 27 being the force application point. In addition, the transmission belt 25 that engages with the outer periphery of the pulley 23 also rotates in the same direction. This rotation of the transmission belt 25 causes the pulley 24, which engages on the end opposite to the pulley 23, to rotate. In addition, the lower-jaw bone portion 17 together with the lower-jaw supporting shaft 19 rotates counterclockwise on the paper surface in Fig. 2.

On the other hand, the lower jaw rod 27 slides backward with the power from the lower jaw cylinder 29 when the mouth is closed. In association with this, the pulley supporting shaft 28 together with the lower jaw link 26 rotates clockwise on the paper surface in Fig. 2, and the transmission belt 25 also rotates in the same direction. This rotation of the transmission belt 25 causes the pulley 24 to rotate. In addition, the lower-jaw bone portion 17 together with the lower-jaw supporting shaft 19 rotates clockwise on the paper surface in Fig. 2.

Meanwhile, due to the structure illustrated in Figs. 2 and 3, the range in which the lower-jaw bone portion 17 can rotate is limited according to the range in which the lower jaw link 26 can rotate on the basis of the distance of sliding of the lower jaw rod 27. It is desirable to set the range in which the lower-jaw bone portion 17 can rotate, to be approximately equivalent to the range in which the jaw joint of a human body can move.

The motion of the lower jaw (mouth) described above can be performed in an automated manner using the power from the lower jaw cylinder 29 as described above.

In addition, the motion of the lower jaw (mouth) described above may be performed (manually) by a user operating the human body model 10. In this case, the energy supplied to the lower jaw cylinder 29 is released with control by the simulator controlling portion 7, which will be described below. For example, in the case where the lower jaw cylinder 29 is an air cylinder, the compressed air is released from the lower jaw cylinder 29. This enables the user to operate the mouth (lower jaw) of the human body model 10 without receiving any interference.

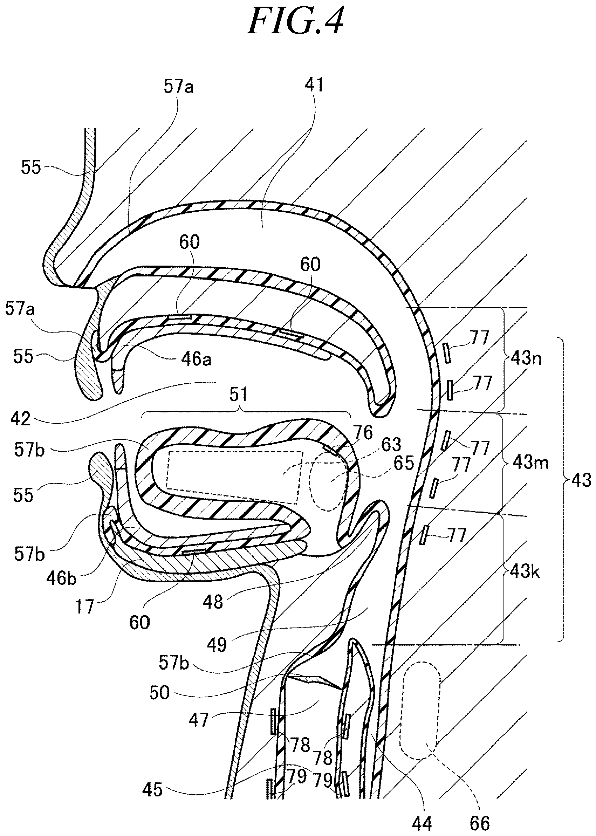

Fig. 4 is a sectional schematic view illustrating the human body model 10. Fig. 4 schematically illustrates part of the forward side of the cross section of the human body model 10 taken along the sagittal plane as viewed from the left side.

The human body model 10 includes simulated portions that simulate the nasal cavity, the oral cavity, the pharynx, the larynx, the trachea, the esophagus, the bronchus, and the stomach of a human body. Of these simulated portions, Fig. 4 illustrates a nasal cavity portion 41, an oral cavity portion 42, a pharynx portion 43, a larynx portion 47, a trachea portion 45, and an esophagus portion 44.

The larynx portion 47 of the human body model 10 is a portion that simulates the lumen from the epiglottis 48 and the aditus laryngis 49 to the trachea 45. The larynx portion 47 includes a simulated vocal cords portion 50.

The pharynx portion 43 of the human body model 10 is a portion that is located on the backward side of the nasal cavity portion 41, the oral cavity portion 42, and the larynx portion 47. As illustrated in Fig. 4, the pharynx portion 43 is formed of a nasopharynx 43n, an oropharynx 43m, and a laryngopharynx 43k.

The human body model 10 includes a shape holding structure (not illustrated) that forms the human-body external shape and the organ shape. This shape holding structure includes the framework structures illustrated in Figs. 2 and 3. The portions shaded with wide lines illustrated in Fig 4 indicate the areas formed by the shape holding structure and the spaces described above. The structure that forms the areas indicated by these shaded portions with wide lines is not limited to a particular structure.

This shape holding structure is covered with an external body surface mask 55 to form the external shape and the appearance of the human body model 10. The external body surface mask 55 is configured to simulate the external body surface (skin, hair, and so on) from the head to the belly, and is made of a material having flexibility and stretchability such as silicone rubber. The external body surface mask 55 may be formed so that the portion from the head to the neck is separated from other portions, or may be formed separately for each portion of smaller divided pieces such as the head and the neck. No limitation is applied to the material of the external body surface mask 55.

The term "flexibility" as used in this specification means a property that the external shape can deform due to application of external force, but no limitation is applied to the property after it deforms due to application of external force. For example, a simulated tongue portion 51 having the flexibility, which will be described later, may maintain the deformed state after deformation, or may return to the previous state before it deforms or to a state close to the previous state before it deforms.

In the first exemplary embodiment, at least a portion (also referred to as a "head mask") of the external body surface mask 55 that corresponds to the head is formed so as to be detachable with respect to the human body model 10. For example, this head mask simulates the head of a human body and includes an opening portion that corresponds to the oral opening of a human body. It is desirable to integrally form at least the mouth (orbicularis oris muscle and its surroundings) with one sheet. This makes it possible to use the stretchability especially of the mouth of the head mask to reproduce easiness of opening and difficulty of opening when the mouth portion of the human body model 10 is opened manually. In addition, the human body model 10 has at least two types of head masks having different degrees of stretchability. When used, these two types of head masks are switched according to whether it is under anesthesia.

When a person is under anesthesia, muscles for moving the lower jaw are loosened, which results in the mouth being more easily opened than when the person is in a normal state. In the first exemplary embodiment, in order to simulate such a situation, switch is made when used between the head mask having stretchability corresponding to the degree of easiness of opening of the mouth at the normal time, and the head mask having higher stretchability (more easily stretches) than that at the normal time. By switching into the head mask having reduced stretchability, it is possible to create the degree of easiness with which the mouth opens under anesthesia. This makes it possible to do a more practical medical training that is close to situations that actually happen in the medical field.

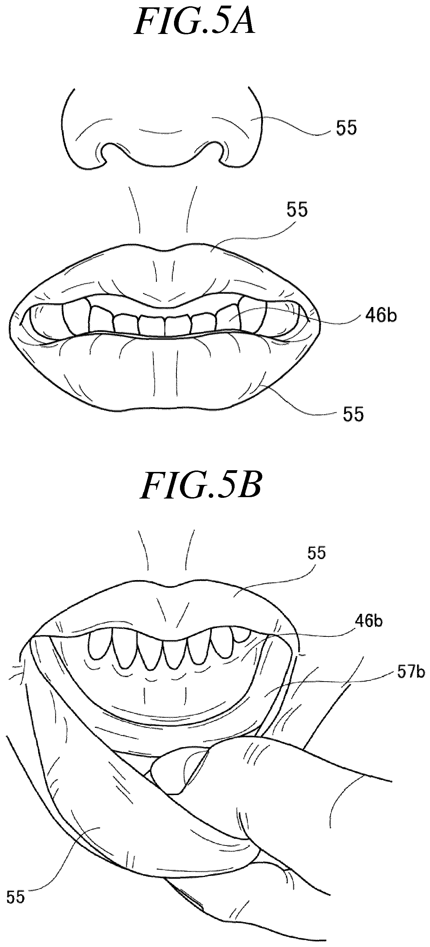

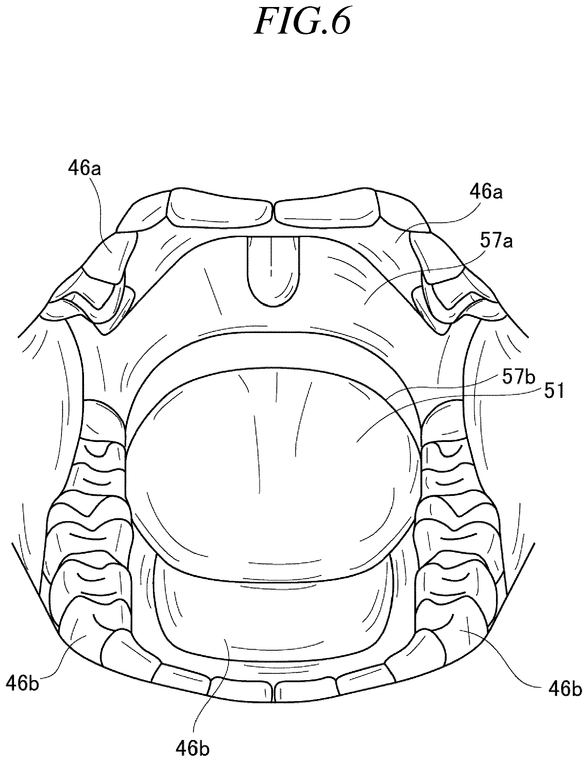

Fig. 5A is a diagram illustrating the external appearance of the nose portion and the mouth portion of the human body model 10. Fig. 5B is a diagram illustrating the structure of the lower lip and its surroundings of the human body model 10. Fig. 6 is a diagram illustrating the oral cavity portion 42 in a state where the mouth is opened.

The external appearance of the nose portion and the mouth portion is formed by the external body surface mask 55. The external body surface mask 55 includes an opening at a position corresponding to the oral opening of a human body, and the oral cavity portion 42 is formed from this opening toward the inside of the human body.

The oral cavity portion 42 is surrounded by an internal body surface mask 57a provided on the outer side of the upper-jaw bone portion 16 and other shape holding structures, and an internal body surface mask 57b provided on the side opposite to the external body surface (lower jaw surface) of the lower-jaw bone portion 17 and other shape holding structures. In addition, an upper teeth structure body 46a and a lower teeth structure body 46b are provided beside the internal body surface masks 57a and 57b on the side of the oral cavity portion 42. Fig. 5A illustrates the state where the teeth portion of the lower teeth structure body 46b is exposed from the opening between the upper lip portion and the lower lip portion of the external body surface mask 55. In addition, as illustrated in Fig. 5B, it can be understood that the external body surface mask 55, the internal body surface mask 57a or 57b, and the upper teeth structure body 46a or lower teeth structure body 46 are provided in this order from the external body surface of the mouth toward the oral cavity portion 42 of the human body model 10.

The upper teeth structure body 46a and the lower teeth structure body 46b are each configured as a tooth row and gums. The upper teeth structure body 46a includes part of the hard palate and has a U-shape along the tooth row and gums, whereas the lower teeth structure body 46b includes the bottom of oral cavity, and has a U-shape along the tooth row and gums. In other words, the upper teeth structure body 46a and the lower teeth structure body 46b each have a so-called shape of artificial teeth. Thus, as illustrated in Fig. 6, the upper teeth structure body 46a and the internal body surface mask 57a are shown on the side of the upper jaw of the oral cavity portion 42, and the lower teeth structure body 46b and the internal body surface mask 57b are shown on the side of the lower jaw of the oral cavity portion 42.

The upper teeth structure body 46a and the lower teeth structure body 46b are supported, from above or from below, by the upper-jaw bone portion 16 or lower-jaw bone portion 17, or the shape holding structure through the internal body surface mask 57a or 57b. In the first exemplary embodiment, the upper teeth structure body 46a and the lower teeth structure body 46b are magnetically attached to the shape holding structure by magnets 60 that the shape holding structure has. However, the supporting structure of the upper teeth structure body 46a and the lower teeth structure body 46b is not limited to such a structure. The upper teeth structure body 46a and the lower teeth structure body 46b may be screwed through the internal body surface mask 57a or 57b to a screw that the shape holding structure has, or may be adhered, for example, with an adhesive to the internal body surface mask 57a or 57b and the shape holding structure.

As illustrated in Figs. 4 and 6, the oral cavity portion 42 is provided with the simulated tongue portion 51.

The simulated tongue portion 51 is a portion that simulates the tongue of a human body, and is configured to have a shape that protrudes from the internal body surface mask 57b. The simulated tongue portion 51 has, inside thereof (internal space portion), a tongue changing mechanism (pushing mechanisms 63 and 65). This tongue changing mechanism causes the simulated tongue portion 51 to deform or displace. Details of this tongue changing mechanism will be described later.

The internal body surface mask 57a further forms the surface of a portion that simulates, for example, the soft palate and the uvula, and forms the internal body surfaces of the nasal cavity portion 41 and the pharynx portion 43, and the internal body surface of the esophagus portion 44.

The internal body surface mask 57b further forms the internal body surface of the epiglottis 48, and the internal body surface of the larynx portion 47 and the trachea 45. This internal body surface mask 57b is formed integrally with the simulated tongue portion 51 to form the surface of the simulated epiglottis 48 having flexibility. For example, the simulated epiglottis 48 is formed such that the shape holding structure is covered with the internal body surface mask 57b as illustrated in Fig. 4.

The internal body surface masks 57a and 57b are made of soft material such as silicone rubber having flexibility so as to simulate the surface of each organ on the food passageway and the airway. The base material of the internal body surface masks 57a and 57b is not limited to a particular material.

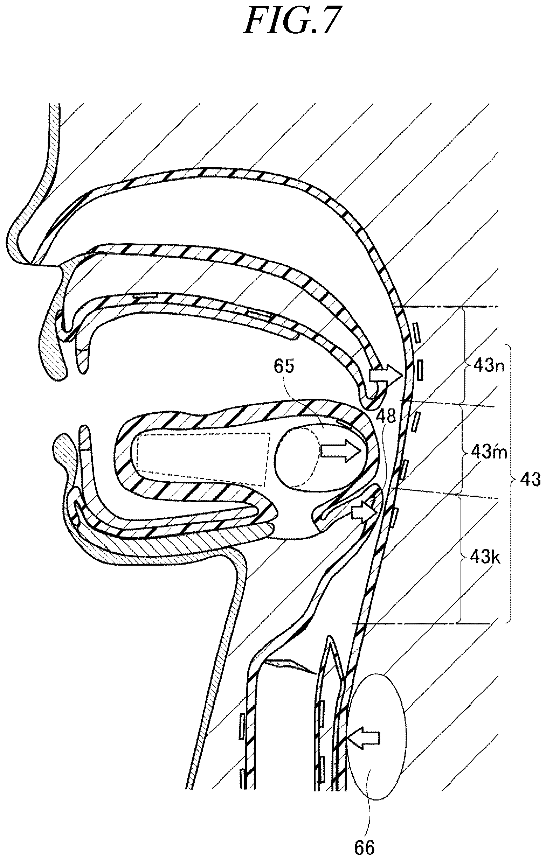

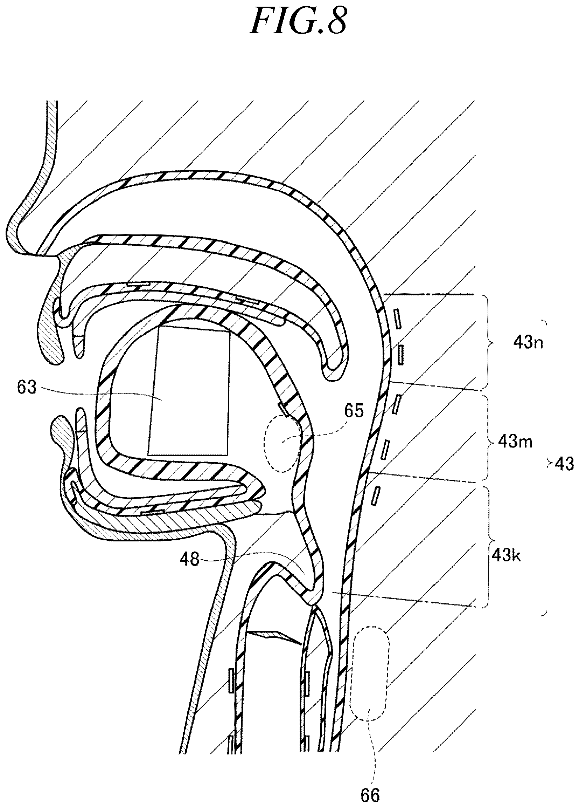

The human body model 10 according to the first exemplary embodiment further includes mechanisms that each deform or displace each of the simulated portions described above, as illustrated in Figs. 7 and 8. The tongue changing mechanism described above is one of such mechanisms. The tongue changing mechanism includes a tongue pushing mechanism 63 and a tongue pushing mechanism 65. In addition, the human body model 10 includes an esophagus pushing mechanism 66 that serves as a mechanism that deforms or displaces the simulated portion.

Fig. 7 is a schematic view illustrating motion of the human body model 10 that simulates the state under anesthesia where the airway and the food passageway are narrowed, and Fig. 8 is a schematic view illustrating motion of the human body model 10 at the time of swallowing reflex.

In a state when a human lies on his or her back under anesthesia, the lingual radix moves backward (hangs down), which makes the esophagus portion narrowed. The human body model 10 according to the first exemplary embodiment operates the tongue pushing mechanism 65 and the esophagus pushing mechanism 66 to simulate the state of a human body under anesthesia as described above, thereby creating the state of a human body illustrated in Fig. 7.

In addition, the swallowing reflex happens even at the time of medical activities such as intubation. The human body model 10 according to the first exemplary embodiment operates the tongue pushing mechanism 63 to simulate such swallowing reflex, thereby creating the state of a human body as illustrated in Fig. 8.

The tongue pushing mechanism 63 is provided in the inner portion of the simulated tongue portion 51 (the inner portion is a hollow portion, and is a portion located on the inner side than the surface of the simulated tongue portion 51), and is a mechanism that pushes the simulated tongue portion 51 upward from the inner side to displace the upper-side surface of the simulated tongue portion 51 upward. The tongue pushing mechanism 63 corresponds to the second pushing mechanism. In the first exemplary embodiment, the tongue pushing mechanism 63 deforms the shape of the internal body surface mask 57b, which forms the simulated tongue portion 51, so as to protrude upward as illustrated in Fig. 8.

The tongue pushing mechanism 63 is configured, for example, using a cylinder and a rod that performs reciprocating motion with respect to the cylinder. In this case, it may be possible to employ a configuration in which the rod itself of the cylinder pushes the underside (the upper surface of the hollow portion) of the simulated tongue portion 51 on the upper side to displace the upper-side surface of the simulated tongue portion 51 upward. Alternatively, the displacement described above may be performed using the motion of link that is in contact with the rod of the cylinder. The tongue pushing mechanism 63 may be configured through other methods, and for example, may be a bag body that inflates and deflates through input/output of air and so on. As described above, the structure of the tongue pushing mechanism 63 is not limited to a particular structure.

In the first exemplary embodiment, the simulated epiglottis 48 is formed so as to hang down to block the aditus laryngis 49 upon the simulated tongue portion 51 deforming so as to protrude upward. This formation can be achieved by the internal body surface mask 57b connecting the simulated epiglottis 48 and the simulated tongue portion 51. Alternatively, a mechanism that can displace from an upward-facing state to a hanging-down state may be provided within the shape holding structure that forms the simulated epiglottis 48. It is only necessary that this mechanism is configured so as to move in association with movement of the tongue pushing mechanism 63.

The tongue pushing mechanism 65 is provided in the inner portion (hollow portion) of the simulated tongue portion 51, and is a mechanism that pushes the simulated tongue portion 51 backward from the inner side to displace the surface of the lingual radix of the simulated tongue portion 51 backward. The tongue pushing mechanism 65 corresponds to the first pushing mechanism. In the first exemplary embodiment, the tongue pushing mechanism 65 causes the shape of the internal body surface mask 57b, which forms the simulated tongue portion 51, to extend and deform toward the backward side, as illustrated in Fig. 7.

The tongue pushing mechanism 65 is, for example, a bag body that has flexibility, and can deflate and inflate through input/output of air and so on. In this case, it is only necessary that this bag body is formed so as to inflate toward the backward as illustrated in Fig. 7. The tongue pushing mechanism 65 may be configured through other methods, and for example, may be configured such that the rod of a cylinder expands and contracts. In this case, the rod of the cylinder outwardly pushes backward from the underside (inner side) of the lingual radix portion of the simulated tongue portion 51 to cause the surface of the lingual radix to displace backward. As described above, the structure of the tongue pushing mechanism 65 is not limited to a particular structure.

The first exemplary embodiment gives an example in which the tongue pushing mechanism 63 and the tongue pushing mechanism 65 are separately provided. However, both of them may be configured as one structure or may be configured as a combination of plural structures. For example, they may be configured to include one bag body and a structure that restricts the direction of expansion of this bag body to two directions: upward and backward. In this case, by controlling the restricted directions, it is possible to form the tongue pushing mechanism 63 and the tongue pushing mechanism 65.

The esophagus pushing mechanism 66 is disposed on the back side of the surface of the esophagus portion 44 of the human body model 10, and pushes to displace forward the surface of the esophagus portion 44 on the backward side (on the posterior side) as illustrated in Fig. 7. The esophagus pushing mechanism 66 corresponds to the third pushing mechanism. In the first exemplary embodiment, the esophagus pushing mechanism 66 causes the internal body surface mask 57a, which forms the esophagus portion 44, to extend and deform forward. This causes at least the esophagus portion 44 to be in a narrowing state.

The esophagus pushing mechanism 66 may be a bag body, as with the tongue pushing mechanism 65. In addition, the esophagus pushing mechanism 66 may be configured such that the rod of a cylinder expands and contracts. Furthermore, the structure of the esophagus pushing mechanism 66 is not limited to a particular structure.

The esophagus pushing mechanism 66 enables reproduction of a narrowed esophagus portion of a patient who lies on his or her back under anesthesia, and hence, according to the first exemplary embodiment, it is possible to provide a highly precise training that is close to actual practices.

In the first exemplary embodiment, the esophagus pushing mechanism 66 is disposed on the back side of the surface of the esophagus portion 44. However, the esophagus pushing mechanism 66 may be disposed in a wider area from the back side of the surface of the esophagus portion 44 to the back side of the surface of the laryngopharynx 43k. In this case, the esophagus pushing mechanism 66 causes the shape of the internal body surface mask 57a, which forms the esophagus portion 44 and the laryngopharynx 43k, to extend and deform forward to cause the esophagus portion 44, the laryngopharynx 43k, and their surroundings to be in the narrowing state.

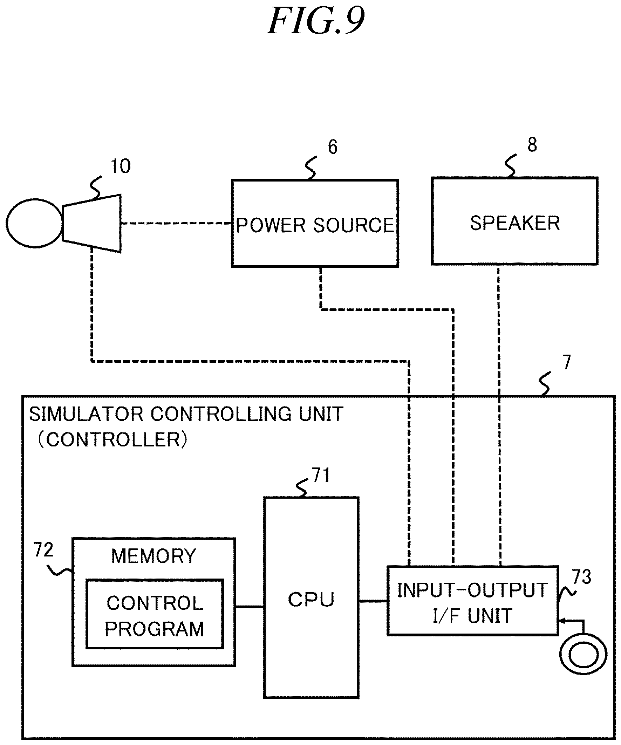

Fig. 9 is a diagram schematically illustrating the configuration of the medical simulator 1 according to the first exemplary embodiment in terms of control of the human body model 10.

As illustrated in Fig. 9, the medical simulator 1 includes, for example, the power source 6 for actuators, the simulator controlling unit 7 (hereinafter, also referred to simply as a controller 7), and the speaker 8. The speaker 8 corresponds to the audio output unit.

The human body model 10 includes actuators including, for example, the left shoulder cylinder 12a, the right shoulder cylinder 12b, the lower jaw cylinder 29, the tongue pushing mechanism 63, the tongue pushing mechanism 65, and the esophagus pushing mechanism 66, as described above. The power source 6 is a power source for each of the actuators described above, and include, for example, a compressor and a pump. For example, in the case where the left shoulder cylinder 12a, the right shoulder cylinder 12b, and the lower jaw cylinder 29 are pneumatic cylinders, the power source 6 includes an air compressor that supplies compressed air. In addition, in the case where the tongue pushing mechanism 65 and the esophagus pushing mechanism 66 are bag bodies as described above, the power source 6 includes a pump that inputs or outputs air. In the first exemplary embodiment, there is no limitation applied to the types of the actuators and the power source 6 that the human body model 10 includes.

The controller 7 includes, for example, a central processing unit (CPU) 71, a memory 72, and an input-output interface (I/F) unit 73 as hardware elements.

The CPU 71 may be one or more general CPUs or micro processing units (MPU). Alternatively, instead of or in combination with this, the CPU 71 may be, for example, an application-specific integrated circuit (ASIC), a digital signal processor (DSP), a graphics processing unit (GPU), and a field programmable gate array (FPGA).

The memory 72 is a random access memory (RAM) and a read only memory (ROM), and may include an auxiliary storage device (such as a hard disk)..

The input-output I/F unit 73 is a unit that controls input or output of signals to be processed or having been processed by the CPU 71, and is connected, for example, to the user interface unit of the input-output panel 5 and the like, the power source 6, sensors that the human body model 10 includes, and the speaker 8. In addition, the input-output I/F unit 73 may include a communication unit that carries out communication with other computers or units, and can be connected, for example to a movable recording medium.

The controller 7 may include a hardware element that is not illustrated in Fig. 9, and the hardware configuration of the controller 7 is not limited to a particular hardware configuration.

The CPU 71 executes control programs stored in the memory 72 to cause the controller 7 to perform, for example, controlling of the power source 6 and controlling of audio output from the speaker 8 while receiving input signals from sensors that the human body model 10 has. These control programs may be stored in advance at the time of shipment, or may be installed through the input-output I/F unit 73 from a movable recording medium such as a compact disc (CD) and a memory card or from other computers on a network, and then be stored in the memory 2.

Before explanation of processes of the controller 7, each of the sensors that the human body model 10 has will be described.

The human body model 10 includes, for example, a lingual-radix sensor 76, a pharynx sensor 77, a larynx sensor 78, and a trachea sensor 79, as illustrated in Fig. 4.

The lingual-radix sensor 76 is provided on or in the vicinity of the surface (for example, on the surface or the underside of the internal body surface mask 57b) of the lingual radix portion of the simulated tongue portion 51, and detects pressures on the surface of lingual radix of the simulated tongue portion 51. The lingual-radix sensor 76 corresponds to a first sensor.

The pharynx sensor 77 is provided on or in the vicinity of the surface (for example, the surface or the underside of the internal body surface mask 57a) of the pharynx portion 43, and detects pressures on the surface of the pharynx portion 43. The pharynx sensor 77 corresponds to the first sensor.

The larynx sensor 78 is provided on or in the vicinity of the surface (for example, the surface or the underside of the internal body surface mask 57b) of the larynx portion 47, and detects pressures on the surface of the larynx portion 47. The larynx sensor 78 corresponds to a second sensor.

The trachea sensor 79 is provided on or in the vicinity of the surface (for example, the surface or the underside of the internal body surface mask 57b) of the trachea portion 45, and detects pressures on the surface of the trachea portion 45. The trachea sensor 79 corresponds to the second sensor.

The human body model 10 may also include sensors at other portions such as the nasal cavity portion 41, the oral cavity portion 42, and the esophagus portion 44. In addition, the locations and the numbers of the sensors 76, 77, 78, and 79 described above are not limited to the examples illustrated in Fig. 4.

Various types of known pressure detecting methods may be used for the sensors 76, 77, 78, and 79 described above to detect pressures. For example, the known pressure detecting methods include, for example, a pressure detecting method called a diffusion type, which detects pressures on the basis of change in resistance values of gauges in association with deformation of the gauges, a method called a capacitive type, and a method called a mechanical type. In addition, it may be possible to use a method that detects pressures on the basis of change in the amount of light received by a light-receiving element.

Furthermore, each of the sensors 76, 77, 78, and 79 described above may detect the existence or absence of pressure, in other words, may detect whether contact with the target surface happens, or may detect the existence or absence of pressures with more than or equal to a predetermined threshold value, or may measure the exact pressure value.

Detection signals from each of the sensors 76, 77, 78, and 79 are sent to the controller 7, pass through the input-output I/F unit 73, and are processed by the CPU 71.

Below, details of processes made by the controller 7 will be specifically described. It should be noted that the details described below are merely examples, and the controller 7 may perform other processes.

### (Reproduction of Anesthetic State)

In response to a predetermined trigger corresponding to "under anesthesia," the controller 7 causes the tongue pushing mechanism 65 and the esophagus pushing mechanism 66 to push to move the surface of the lingual radix of the simulated tongue portion 51 backward and to narrow the esophagus portion 44. More specifically, the controller 7 gives the power source 6 an instruction to actuate the tongue pushing mechanism 65 and the esophagus pushing mechanism 66. For example, in the case where the tongue pushing mechanism 65 and the esophagus pushing mechanism 66 are bag bodies, the controller 7 sends an instruction to the power source 6 so as to supply air to these bag bodies.

This enables the human body model 10 to reproduce a state close to the state of the body of a patient who is under anesthesia and lies on his or her back, as illustrated in Fig. 7.

Here, there is no limitation applied to the predetermined trigger corresponding to the "under anesthesia." For example, the controller 7 causes the input-output panel 5 to display a selection menu as to whether it is under anesthesia, and if a user operates the selection menu and the "under anesthesia" is detected to be selected, this detection may be used as the predetermined trigger. As another example, the controller 7 may automatically switch from the normal state to the "under anesthesia" at a given timing, and this switching may be used as the predetermined trigger.

### (Reproduction of Pharyngeal Reflex)

Furthermore, in response to detection of pressures by the lingual-radix sensor 76 or pharynx sensor 77, the controller 7 causes the tongue pushing mechanism 65 to push to displace the surface of the lingual radix of the simulated tongue portion 51 backward, and also causes the speaker 8 to output a nausea sound. More specifically, the controller 7 judges whether or not the lingual-radix sensor 76 or pharynx sensor 77 detects pressures, on the basis of detection signals from the lingual-radix sensor 76 and the pharynx sensor 77. If the controller 7 judges that pressures are detected, the controller 7 gives the power source 6 an instruction to actuate the tongue pushing mechanism 65 as described above. In addition, the controller 7 reads audio data on the nausea sound stored in advance in the memory 72 to play the audio data, thereby causing the speaker 8 to output the nausea sound.

Humans produce pharyngeal reflex when an object is brought into contact with the lingual radix portion or pharynx portion 43. Such pharyngeal reflex may take place, for example, during oral tracheal intubation or oral endoscopy. The process by the controller 7 described above enables the human body model 10 to reproduce this pharyngeal reflex, and hence, according to the first exemplary embodiment, it is possible to provide a highly precise training that is close to actual practices in the medical field.

### (Reproduction of Swallowing Reflex)

In response to a predetermined trigger corresponding to swallowing reflex, the controller 7 causes the tongue pushing mechanism 63 to push the simulated tongue portion 51 upward from the inner side and to hang down the simulated epiglottis 48. More specifically, the controller 7 gives the power source 6 an instruction to actuate the tongue pushing mechanism 63. For example, in the case where the tongue pushing mechanism 63 is made of a cylinder and a rod that performs reciprocating motion using a piston in the cylinder, the controller 7 sends an instruction to the power source 6 to supply compressed air to the cylinder. In the first exemplary embodiment, the simulated epiglottis 48 is formed so as to hang down to block the aditus laryngis 49 due to deformation of the simulated tongue portion 51 upward, and hence, it is possible to hang down the simulated epiglottis 48 in association with actuation of the tongue pushing mechanism 63.

A patient may perform swallowing motion reflexively, for example, at the time of oral tracheal intubation or oral endoscopy. With the control by the controller 7 as described above, it is possible for the human body model 10 to reproduce the motion within the body of a patient at the time of swallowing, as illustrated in Fig. 8. Thus, according to the first exemplary embodiment, it is possible to provide a highly precise training that is close to actual practices in the medical field.

### (Reproduction of Coughing)

Furthermore, in accordance with detection of pressures by the larynx sensor 78 or trachea sensor 79, the controller 7 can cause the left shoulder cylinder 12a and the right shoulder cylinder 12b to perform the craniocaudal rotation of the upper-jaw supporting plate 18 (upper-jaw supporting portion), and also cause the speaker 8 to output a coughing sound. More specifically, the controller 7 judges whether or not the larynx sensor 78 or trachea sensor 79 detects pressures, on the basis of detection signals from the larynx sensor 78 and the trachea sensor 79. If the controller 7 judges that pressures are detected, the controller 7 gives the power source 6 an instruction to actuate the left shoulder cylinder 12a and the right shoulder cylinder 12b, causing the left neck rod 13a and the right neck rod 13b to perform reciprocating motion. In addition, the controller 7 reads audio data on the coughing sound stored in advance in the memory 72 to play the audio data, thereby causing the speaker 8 to output the coughing sound.

Humans produce cough reflex in order to remove foreign substances existing, for example, in the airway. Thus, cough reflex may take place, for example, at the time of tracheal intubation. At the time of cough reflex, sudden breathing-out motions occur, making coughing sound such as *kon kon,* and *goph, goph.* In the first exemplary embodiment, by performing the craniocaudal rotation of the upper-jaw supporting plate 18, it is possible to move the head of the human body model 10 in the craniocaudal direction (similar to a large nodding motion). In addition, by outputting the coughing sound, it is possible to reproduce motion of a patient at the time of coughing.

### [Second Exemplary Embodiment]

Below, a medical simulator 1 according to a second exemplary embodiment will be described.

The medical simulator 1 according to the second exemplary embodiment further reproduces nasal septum deviation and esophagus dilatation, in addition to the configuration of the first exemplary embodiment. In the description below, explanation of details that are the same as those in the first exemplary embodiment will be omitted as appropriate, and description will be focused on details that are different from those in the first exemplary embodiment.

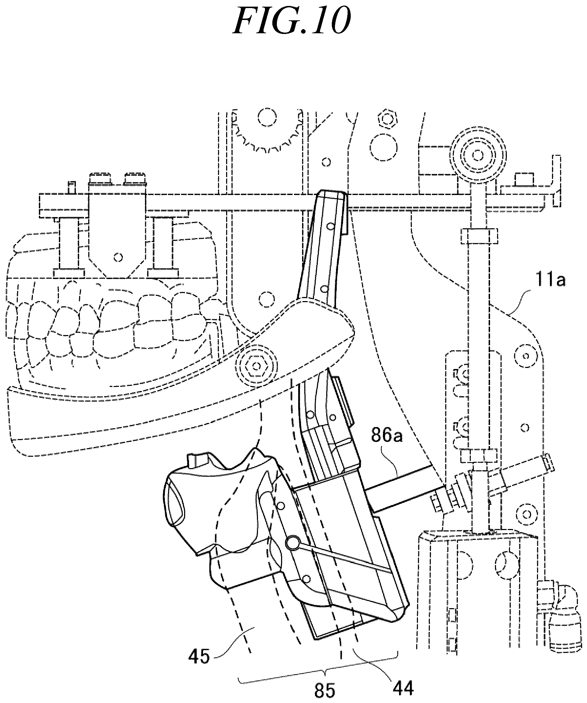

First, with reference to Fig. 10 to Fig. 13, the esophagus dilatation that is reproduced in the second exemplary embodiment will be described in detail.

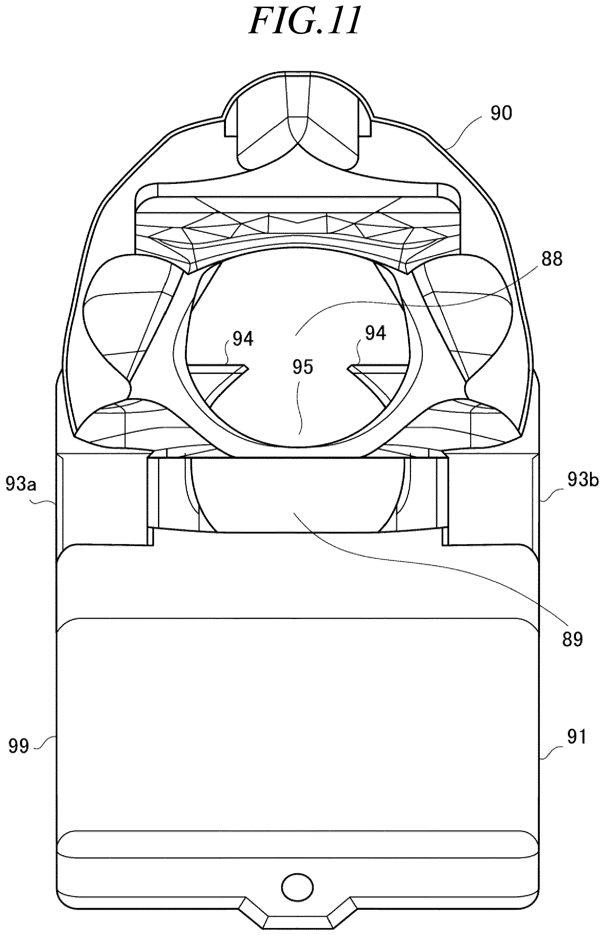

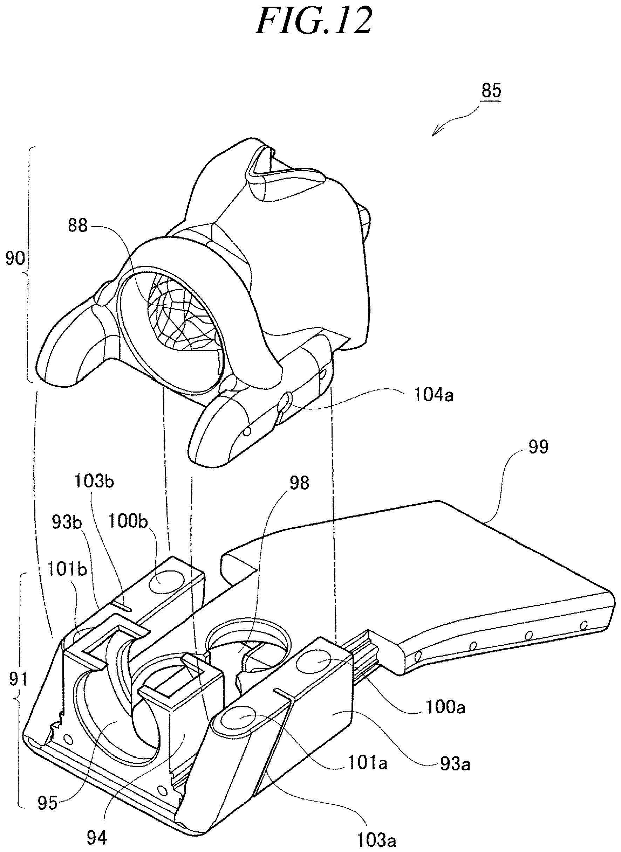

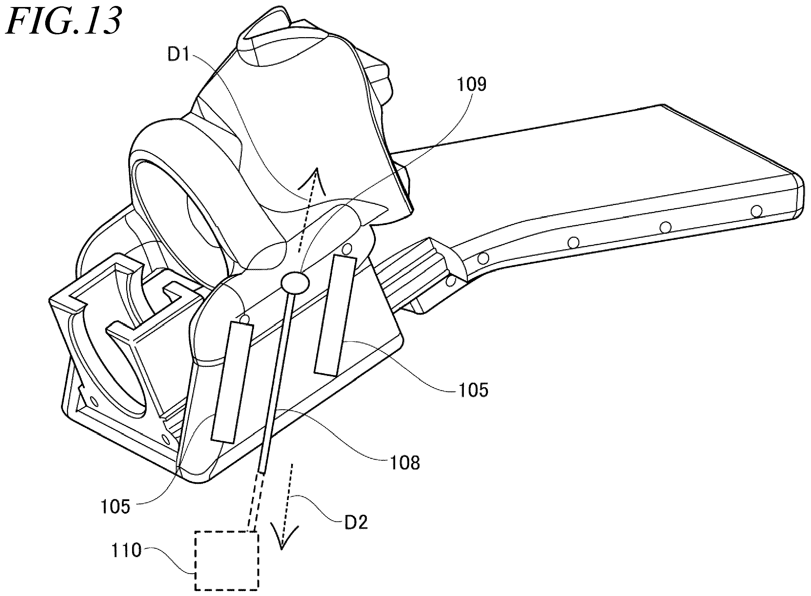

Fig. 10 is a side view illustrating a simulated thyroid cartilage portion 85 provided in the framework structure of the human body model 10 according to the second exemplary embodiment. Fig. 11 is a diagram illustrating the simulated thyroid cartilage portion 85 as viewed from above. Fig. 12 is an exploded view illustrating the simulated thyroid cartilage portion 85. Fig. 13 is a diagram schematically illustrating motion of the simulated thyroid cartilage portion 85.

As illustrated in Fig. 10, the simulated thyroid cartilage portion 85 is provided in the larynx portion of the human body model 10, and is connected, on the backward side thereof, to the left neck supporting plate 11a and the right neck supporting plate 11b through the left supporting spring portion 86a and the right supporting spring portion (not illustrated). The left neck supporting plate 11a and the right neck supporting plate 11b correspond to a neck supporting portion, whereas the left supporting spring portion 86a and the right supporting spring portion correspond to a first spring member. Note that, in Fig. 10, the simulated thyroid cartilage portion 85 and the left supporting spring portion 86a are indicated as the solid lines, and other framework structures are indicated as the dashed lines.

The esophagus portion 44 and the trachea portion 45 pass through the inner side of the simulated thyroid cartilage portion 85 as indicated with the long dashed line in Fig. 10. The internal body surfaces of the esophagus portion 44 and the trachea portion 45 are formed by the internal body surface mask 57a and the internal body surface mask 57b, each of which has flexibility, as described in the first exemplary embodiment. In other words, the esophagus portion 44 and the trachea portion 45 are formed by tubular members made out of the internal body surface mask 57a and the internal body surface mask 57b, respectively. More specifically, the inner-side surface of the tubular body of the internal body surface mask 57a and the internal body surface mask 57b reproduces the internal body surface of the pharynx portion 43. The tubular body bifurcates so that one of the tubular bodies (tubular members) forms the esophagus portion 44 and the other one of the tubular bodies (tubular members) forms the larynx portion and the trachea portion 45.

The simulated thyroid cartilage portion 85 is made of a material harder than that of the tubular member of the esophagus portion 44 and the tubular member of the trachea portion 45, and allows the tubular member of the esophagus portion 44 and the tubular member of the trachea portion 45 to pass through the inner side thereof. In other words, the simulated thyroid cartilage portion 85 has a structure that simulates the thyroid cartilage and the cricoid cartilage of a human body.

The left supporting spring portion 86a and the right supporting spring portion connect the simulated thyroid cartilage portion 85 to the left neck supporting plate 11a and the right neck supporting plate 11b so that these spring portions can move in the anteroposterior direction, in the left-right direction, and in the craniocaudal direction with respect to the left neck supporting plate 11a and the right neck supporting plate 11b. It is only necessary that the left supporting spring portion 86a and the right supporting spring portion can expand and contract, can tilt, and is elastically deformable. For example, a coil spring, a flat spring, and the like can be used. However, no limitation is applied to the base material of and the shape of the left supporting spring portion 86a and the right supporting spring portion.

As described above, in the second exemplary embodiment, the simulated thyroid cartilage portion 85 is connected to the left neck supporting plate 11a and the right neck supporting plate 11b (neck supporting portion) by the spring member (first spring member), which can expand, contract, and tilt, in a state where the tubular bodies (tubular members) of the esophagus portion 44 and the trachea portion 45 pass through the portion 85. This enables the simulated thyroid cartilage portion 85 to move in the anteroposterior direction, in the left-right direction, and in the craniocaudal direction with respect to the neck upon application of external force, which makes it possible to faithfully reproduce the structure of the thyroid cartilage and its surroundings of a human body. Thus, it is possible to do practical training in a procedure called the Back-Up-Right-Pressure (BURP) method for improving the visualization of the vocal cords at the time of tracheal intubation.

The simulated thyroid cartilage portion 85 includes a trachea-side cartilage portion 90 and an esophagus-side cartilage portion 91, as illustrated in Fig. 12. The trachea-side cartilage portion 90 is disposed on the forward side, and the esophagus-side cartilage portion 91 is disposed on more backward side than the trachea-side cartilage portion 90. As illustrated in Fig. 11, combination of the trachea-side cartilage portion 90 and the esophagus-side cartilage portion 91 creates an esophagus passageway portion 89 through which the tubular member of the esophagus portion 44 passes, and a trachea passageway portion 88 through which the tubular member of the trachea portion 45 passes. As described above, the simulated thyroid cartilage portion 85 includes, inside thereof, the trachea passageway portion 88 and the esophagus passageway portion 89.

More specifically, the trachea-side cartilage portion 90 has a through hole running in the craniocaudal direction (a direction perpendicular to the paper surface of Fig. 11), and this through hole serves as the trachea passageway portion 88. The tubular member of the trachea portion 45 passes through this through hole. The trachea-side cartilage portion 90 reproduces portions of the thyroid cartilage and the cricoid cartilage on the forward side.

On the other hand, the esophagus-side cartilage portion 91 includes, for example, a pharynx plate 99 provided so as to extend in the craniocaudal direction, a left cartilage wall 93a and a right cartilage wall 93b provided on left and right sides, respectively, of the pharynx plate 99, and an esophagus passageway box 94 provided at the lower end of the pharynx plate 99.

The pharynx plate 99 includes two main planes (hereinafter, each referred to as a main surface) on the forward side and the backward side. In a state of being combined with the trachea-side cartilage portion 90, the main surface of the pharynx plate 99 on the forward side is separated into the lower portion covered with the trachea-side cartilage portion 90 and the upper portion not covered with the trachea-side cartilage portion 90. As illustrated in Fig. 10, the upper portion of the pharynx plate 99 is gently leaned backward from the lower side to the upper side. This upper portion of the pharynx plate 99 is covered with the internal body surface mask 57b, thereby forming the backward wall of the pharynx.

In addition, the lower portion, covered with the trachea-side cartilage portion 90, of the main surface of the pharynx plate 99 on the forward side, in other words, a portion where the esophagus passageway portion 89 is formed, is provided with an esophagus locking hole 98 as illustrated in Fig. 12. In this exemplary embodiment, the esophagus locking hole 98 penetrates the main surface of the pharynx plate 99 in the anteroposterior direction. A protruding portion provided on the outer surface of the tubular member of the esophagus portion 44 is fitted into this esophagus locking hole 98, and hence, the esophagus portion 44 is locked relative to the simulated thyroid cartilage portion 85.

The left cartilage wall 93a and the right cartilage wall 93b stand toward the forward direction at the lower portions of the left and right sides of the pharynx plate 99. The forward end surfaces (upper surface) of the left cartilage wall 93a and the right cartilage wall 93b are configured so as to be able to be joined to the surface of the trachea-side cartilage portion 90 on the backward side. The left cartilage wall 93a and the right cartilage wall 93b, in conjunction with the main surface of the pharynx plate 99 on the forward side and the wall surface of the trachea-side cartilage portion 90 on the backward side (back surface side), form the esophagus passageway portion 89. As described above, in this exemplary embodiment, the esophagus passageway portion 89 is formed from the combination of the trachea-side cartilage portion 90 and the esophagus-side cartilage portion 91.

The esophagus passageway box 94 is a hollow, box-shaped body having a substantially rectangular shape, and has an opening on each of the upper and lower surfaces through which the tubular member of the esophagus portion 44 passes. As described above, the esophagus passageway portion 89, formed, for example, of the left cartilage wall 93a, the right cartilage wall 93b, and the pharynx plate 99, passes through the opening of the upper surface of the esophagus passageway box 94, and ends at the opening provided on the lower surface of the esophagus passageway box 94. The opening provided on the lower surface of the esophagus passageway box 94 is denoted as the reference character "95," and is referred to as an esophagus passageway opening 95. The tubular member of the esophagus portion 44 may be fixed inside of the esophagus passageway box 94.

Furthermore, in this exemplary embodiment, the simulated thyroid cartilage portion 85 further includes four separation spring portions 105 and two cartilage wires 108. In Fig. 13, only two separation spring portions 105 of the four separation spring portions 105 are illustrated in a schematic manner, and only one cartilage wire 108 of the two cartilage wires 108 is illustrated in a schematic manner. Note that Fig. 13 is merely a schematic view, and hence, the separation spring portions 105 and the cartilage wires 108 are not necessarily visible in a manner illustrated in the drawing.

It is only necessary that the separation spring portions 105 can expand and contract at least in the longitudinal direction, and are elastically deformable. For example, a coil spring can be used. However, no limitation is applied to the base material of and the shape of the separation spring portion.

Each of the separation spring portions 105 is accommodated in the spring hole provided in the trachea-side cartilage portion 90 and the spring hole provided in the esophagus-side cartilage portion 91. More specifically, the separation spring portions 105 are each accommodated in a space formed by a spring hole 100a, 101a, 100b, or 101b and one of four spring holes (not illustrated). Two of the spring holes 100a, 101a, 100b, and 101b are provided in the left cartilage wall 93a of the esophagus-side cartilage portion 91, and the other two are provided in the right cartilage wall 93b. In addition, the not-illustrated four spring holes are provided in the trachea-side cartilage portion 90 so as to correspond to the spring holes 100a, 101a, 100b, 101b. For example, one separation spring portion 105 is inserted into the spring hole 100a of the left cartilage wall 93a, and another separation spring portion 105 is inserted into the spring hole 101a of the left cartilage wall 93a.

In this exemplary embodiment, the separation spring portion 105 applies urging force toward a direction (separating direction) in which the trachea-side cartilage portion 90 and the esophagus-side cartilage portion 91 are spaced apart from each other. In addition, in this exemplary embodiment, the urging direction of the separation spring portion 105 is a diagonally upward direction with respect to the anteroposterior direction of the human body model 10 (the arrow D1 with a dashed line in Fig. 13). In this exemplary embodiment, the depth direction of the spring hole 100a, 101a, 100b, 101b is set to be diagonal in the craniocaudal direction with respect to the anteroposterior direction of the human body model 10. Each of the separating spring portions expands and contracts in the depth direction of each of the spring holes, thereby setting the urging direction. This urging force of the separation spring portion 105 as described above causes the trachea-side cartilage portion 90 to move in the urging direction of the separation spring portion 105 with respect to the esophagus-side cartilage portion 91. As described above, motion of the thyroid cartilage of a human is reproduced faithfully.

The cartilage wire 108 extends between the trachea-side cartilage portion 90 and the esophagus-side cartilage portion 91 so as to be in parallel to the urging direction (the depth direction of the spring hole) of the separation spring portion 105. A spherical body 109 is provided on one end of the wire, and is fixed to the trachea-side cartilage portion 90. The wire passes through the trachea-side cartilage portion 90 and the esophagus-side cartilage portion 91. The other end of the wire is connected to the cartilage actuator 110.

In this exemplary embodiment, two cartilage wires 108 are inserted into and pass through wire slits 103a and 103b, each of which is provided on the left cartilage wall 93a and the right cartilage wall 93b of the esophagus-side cartilage portion 91. A fitting opening portion is provided on each of the left and right ends of the trachea-side cartilage portion 90 (only the fitting opening portion 104a is illustrated in the drawing), and the spherical body 109 of the end portion of the wire is fitted into the fitting opening portion, and is fixed.

The cartilage actuator 110, which is connected to the cartilage wire 108, corresponds to the first actuator that applies power to the simulated thyroid cartilage portion 85, and may be an air cylinder or may be a hydraulic or electric cylinder or may be a motor or other unit that produces rotating power. Note that the cartilage wire 108 and the cartilage actuator 110 may be connected to each other indirectly through other structures.

The cartilage wire 108 is pulled by the power from the cartilage actuator 110 in a direction in which the trachea-side cartilage portion 90 is brought closer to the esophagus-side cartilage portion 91. On the other hand, the backward side (the back surface side) of the esophagus-side cartilage portion 91 is connected to and supported by the left neck supporting plate 11a and the right neck supporting plate 11b through the left supporting spring portion 86a and the right supporting spring portion. With this configuration, the cartilage wire 108 applies, to the trachea-side cartilage portion 90, reaction force to the urging force of the separation spring portion 105. This urging force retains the trachea-side cartilage portion 90 and the esophagus-side cartilage portion 91 so that they are not separated. Thus, the cartilage wire 108 can be referred to as a reaction-force applying member that applies, to the trachea-side cartilage portion 90 or the esophagus-side cartilage portion 91, reaction force to the urging force of the second spring member (separation spring portion 105). In this exemplary embodiment, the reaction force applied with the cartilage wire 108 acts in a direction (the arrow D2 with a dashed line in Fig. 13) opposite to the urging direction of the separation spring portion.

The structure described above enables the cartilage wire 108 to be pulled by the power from the cartilage actuator 110. Once the trachea-side cartilage portion 90 and the esophagus-side cartilage portion 91 are joined with each other, the wall surface of the trachea-side cartilage portion 90 on the backward side and the main surface of the pharynx plate 99 on the forward side press the esophagus passageway portion 89, reducing the transverse cross-sectional area of the esophagus passageway portion 89, as illustrated in Fig. 11. This brings the tubular member of the esophagus portion 44, which passes through the esophagus passageway portion 89, into a narrowing state. This narrowing state here represents a state where a certain degree of space is left, rather than a completely flattened state. In addition, the transverse cross-sectional area of the esophagus passageway portion 89 represents the cross section of a space obtained by cutting the esophagus passageway portion 89 (space) by a plane perpendicular to the direction in which the tubular member of the esophagus portion 44 is inserted. The esophagus of a human body is usually in a flattened state during a normal time, and hence, this exemplary embodiment reproduces the normal state of a human body by joining the trachea-side cartilage portion 90 and the esophagus-side cartilage portion 91 together.

On the other hand, if the pulling force of the cartilage wire 108 reduces and the urging force of the separation spring portion 105 becomes predominant, the trachea-side cartilage portion 90 and the esophagus-side cartilage portion 91 are spaced apart from each other. The direction in which the trachea-side cartilage portion 90 is spaced apart from the esophagus-side cartilage portion 91 is substantially equal to the urging direction of the separation spring portion 105, and hence, this motion of the simulated thyroid cartilage portion 85 is close to the motion of the thyroid cartilage of a human. Once the trachea-side cartilage portion 90 and the esophagus-side cartilage portion 91 are spaced apart from each other, the trachea-side cartilage portion 90 moves upward in the paper surface in Fig. 11, and hence, the transverse cross-sectional area of the esophagus passageway portion 89 increases. This results in an increase in the transverse cross-sectional area of the tubular member of the esophagus portion 44 that passes through the esophagus passageway portion 89.

As described above, it can be said that the simulated thyroid cartilage portion 85 has a passageway deforming mechanism that changes the transverse cross-sectional area of at least part of the esophagus passageway portion 89 using power from the cartilage actuator 110. On the other hand, the trachea passageway portion 88 is a through hole in the trachea-side cartilage portion 90, and is configured so that the transverse cross-sectional area thereof does not change even if the trachea-side cartilage portion 90 moves.

This exemplary embodiment reproduces the esophagus dilatation while faithfully reproducing motion of the thyroid cartilage and its surroundings as described above.

Meanwhile, the tubular member of the esophagus portion 44 is configured so as to follow the expansion and contraction of the transverse cross-sectional area of the esophagus passageway portion 89. This following may be achieved by a property of elastic deformation of the tubular member of the esophagus portion 44 or may be achieved by adhesion of the outer surface of this tubular member to the wall surface forming the esophagus passageway portion 89 or may be achieved with other methods.

In addition, the passageway deforming mechanism of the simulated thyroid cartilage portion 85 that changes the transverse cross-sectional area of at least part of the esophagus passageway portion 89 is not limited to the structure described above. For example, it may be possible to employ a configuration in which the esophagus-side cartilage portion 91 has a through hole in the craniocaudal direction, as with the trachea-side cartilage portion 90, and this through hole serves as the esophagus passageway portion 89. In this case, the trachea-side cartilage portion 90 and the esophagus-side cartilage portion 91 may be provided with another member so that this member closes the through hole of the esophagus-side cartilage portion 91 part way.

The urging force of the separation spring portion 105 described above acts in a direction in which the trachea-side cartilage portion 90 and the esophagus-side cartilage portion 91 are spaced apart from each other, because the separation spring portion 105 is accommodated in the spring hole in a contracted state. However, in the case where both ends of the separation spring portion 105 are fixed at the spring hole and the separation spring portion 105 is accommodated in the spring hole in an expanded state, this urging force acts in the opposite direction. In other words, it may be possible to cause the urging force of the separation spring portion 105 to act in a direction in which the trachea-side cartilage portion 90 and the esophagus-side cartilage portion 91 are pulled toward each other. In this case, it is only necessary that this reaction force is caused to act in a direction in which trachea-side cartilage portion 90 and the esophagus-side cartilage portion 91 are spaced apart from each other, and the cartilage wire 108 is only necessary to receive external force in a pushed-out direction with respect to the simulated thyroid cartilage portion 85 using the power from the cartilage actuator 110. In this case, it is desirable for the cartilage wire 108 to use a sliding member (for example, made out of metal) having bending stiffness greater than that of the wire member.

In addition, in the configuration described above, the reaction force to the urging force of the separation spring portion 105 is applied to the trachea-side cartilage portion 90. However, the reaction force may be applied to the esophagus-side cartilage portion 91. In this case, the trachea-side cartilage portion 90 is separately fixed (supported), and the esophagus-side cartilage portion 91 may be moved in a direction toward or away from the trachea-side cartilage portion 90.

More specifically, it can be said that the simulated thyroid cartilage portion 85 includes a second spring member (for example, the separation spring portion) that applies urging force in a direction in which the trachea-side cartilage portion 90 and the esophagus-side cartilage portion 91 are pulled toward each other or in a direction in which they are spaced apart from each other, and a reaction-force applying member that applies, to the trachea-side cartilage portion 90 or the esophagus-side cartilage portion 91, reaction force to the urging force of the second spring member. The power from the cartilage actuator 110 described above is used as the reaction force to cause the trachea-side cartilage portion 90 and the esophagus-side cartilage portion 91 to move toward each other or away from each other, which makes it possible to change the transverse cross-sectional area of at least part of the esophagus passageway portion 89.

In the case of the medical simulator 1 according to the second exemplary embodiment, the human body model 10 has a control-related configuration similar to that of the first exemplary embodiment (see Fig. 9). However, the following processing details performed in the controller 7 differ from those in the first exemplary embodiment. Below, description will be made with focus being placed on processing details of the controller 7 different from those in the first exemplary embodiment.

### (Reproduction of Pharyngeal Reflex)

The second exemplary embodiment reproduces the esophagus dilatation at the time of pharyngeal reflex (vomiting reflex).

More specifically, in response to detection of pressures by the lingual-radix sensor 76 or pharynx sensor 77, the controller 7 cause the cartilage actuator 110 to operate to increase the transverse cross-sectional area of at least part of the esophagus passageway portion 89. Yet more specifically, if the controller 7 judges that the lingual-radix sensor 76 or pharynx sensor 77 detects pressures, on the basis of detection signals from the lingual-radix sensor 76 and the pharynx sensor 77, the controller 7 gives the power source 6 an instruction to operate the cartilage actuator 110, thereby reducing the pulling force of the cartilage wire 108. This results in the urging force of the separation spring portion 105 becoming predominant. The trachea-side cartilage portion 90 is spaced apart from the esophagus-side cartilage portion 91. The transverse cross-sectional area of the esophagus passageway portion 89 expands, and the tubular member of the esophagus portion 44 expands. After a predetermined period of time elapses, the controller 7 further gives the power source 6 an instruction to operate the cartilage actuator 110 to pull the cartilage wire 108, thereby causing the trachea-side cartilage portion 90 and the esophagus-side cartilage portion 91 to be joined together. This makes the esophagus portion 44, which has been expanded due to pharyngeal reflex, return to a flattened state in the normal time.

At this time, it may be possible that the controller 7 causes the surface of the lingual radix of the simulated tongue portion 51 to displace backward, and causes the speaker 8 to output the nausea sound, as in the first exemplary embodiment. In addition, the controller 7 causes the left shoulder cylinder 12a and the right shoulder cylinder 12b to perform the craniocaudal rotation of the upper-jaw supporting plate 18 (upper-jaw supporting portion), enabling the head of the human body model 10 to move in the craniocaudal direction.

This enables reproduction of the esophagus dilatation at the time of pharyngeal reflex (vomiting reflex), improving faithfulness to the actual pharyngeal reflex (vomiting reflex) and further improving the training accuracy in the medical field so as to be closer to actual practices.

In addition, it may be possible that the controller 7 causes the lower jaw cylinder 29 to cause the lower jaw rod 27 to perform reciprocating motion in the anteroposterior direction to rotate the lower-jaw bone portion 17, thereby opening and closing the mouth of the human body model 10. For example, it may be possible that, in response to detection of pressures by the lingual-radix sensor 76 or pharynx sensor 77, the controller 7: causes the cartilage actuator 110 to operate to increase the transverse cross-sectional area of at least part of the esophagus passageway portion 89; causes the left shoulder cylinder 12a and the right shoulder cylinder 12b to operate to move the head of the human body model 10 toward the craniocaudal direction; causes the lower jaw cylinder 29 to operate to open the mouth of the human body model 10; and causes the speaker 8 to output the nausea sound.

In this manner, it is possible to faithfully reproduce motion of the body at the time of pharyngeal reflex (vomiting reflex), which makes it possible to provide a highly precise training that is close to actual practices.

### (Reproduction of Swallowing Reflex)

At the time of nasal or oral endoscopy, an endoscope needs to be inserted into the esophagus. However, at the normal state, the esophagus is flattened, which makes it difficult to insert the endoscope. Thus, a doctor says, for example, "Please swallow saliva" to facilitate swallowing, and inserts the endoscope into the esophagus during the time when the esophagus expands due to swallowing. For this reason, the second exemplary embodiment reproduces the esophagus dilatation at the time of swallowing reflex.

More specifically, in response to a predetermined trigger corresponding to "swallowing reflex," the controller 7 causes the cartilage actuator 110 to operate to expand the transverse cross-sectional area of at least part of the esophagus passageway portion 89. Yet more specifically, in response to a predetermined trigger corresponding to the swallowing reflex, the controller 7 gives the power source 6 an instruction to cause the cartilage actuator 110 to operate to reduce the force that pulls the cartilage wire 108. This makes the urging force of the separation spring portion 105 predominant. The trachea-side cartilage portion 90 is spaced apart from the esophagus-side cartilage portion 91. The transverse cross-sectional area of the esophagus passageway portion 89 expands, and the tubular member of the esophagus portion 44 expands. After a predetermined period of time elapses, the controller 7 further gives the power source 6 an instruction to cause the cartilage actuator 110 to operate to pull the cartilage wire 108, thereby joining the trachea-side cartilage portion 90 and the esophagus-side cartilage portion 91 together. This causes the esophagus portion 44 that has been expanded due to swallowing reflex to return to the flattened state at the time of the normal state.

At this time, the controller 7 causes the tongue pushing mechanism 63 to push the simulated tongue portion 51 upward from the inside, enabling the simulated epiglottis 48 to hang down.

There is no limitation applied to the predetermined trigger corresponding to the swallowing reflex. For example, the controller 7 causes the input-output panel 5 to display an execute menu for swallowing, and it may be possible to use detection of a user operation for the execute menu as the predetermined trigger. As another example, the controller 7 may cause the swallowing reflex to be implemented at any timing (randomly), and the occurrence of the timing may serve as the predetermined trigger.

In this manner, it is possible to reproduce the esophagus dilatation as swallowing reflex. This makes it possible to improve faithfulness to the actual swallowing reflex and further improve the training accuracy in the medical field so as to be closer to the actual practices.

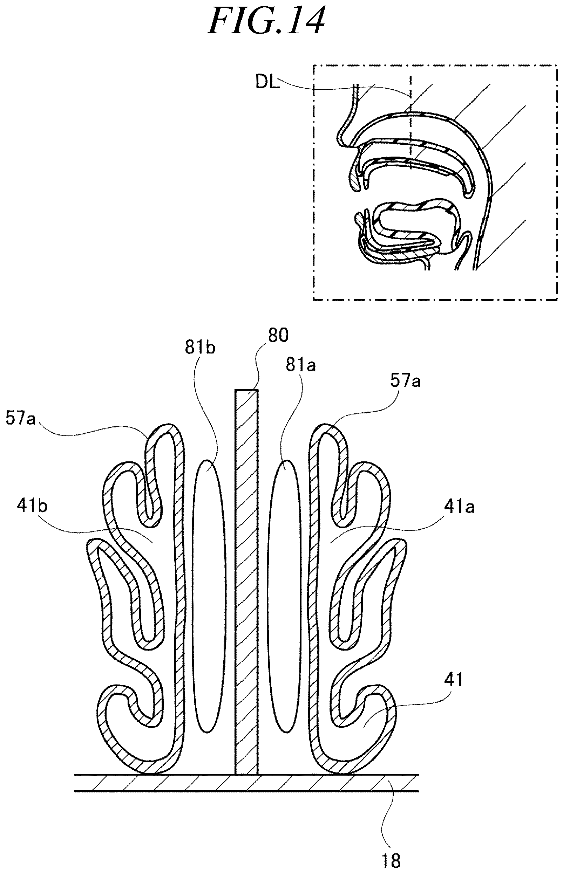

Next, with reference to Fig. 14, the nasal septum deviation reproduced in the second exemplary embodiment will be described in detail.

Fig. 14 is a sectional schematic view illustrating the structure of the nasal cavity portion 41 and its surroundings of the human body model 10 according to the second exemplary embodiment. Illustrated is part of cross section, as viewed from the forward direction, of the human body model 10 taken along the line DL in the sectional schematic view illustrated in the upper right.

As illustrated in Fig. 14, the nasal cavity portion 41 is separated into left and right by the nasal-septum plate portion 80. The left side via the nasal-septum plate portion 80 is denoted as a left nasal cavity portion 41a, and the right side is denoted as a right nasal cavity portion 41b.

The nasal-septum plate portion 80 simulates the nasal septum, and is made out of a material having hardness similar to those of, for example, the upper-jaw bone portion 16 and the upper-jaw supporting plate 18, each of which serves as the framework structure of the human body model 10. For example, metal or resin is used for the base material of the nasal-septum plate portion 80. The nasal-septum plate portion 80 is provided so as to stand at the center when viewed from the forward direction of the upper surface of the upper-jaw supporting plate 18. The nasal-septum plate portion 80 and the upper-jaw supporting plate 18 are connected to each other.

The internal body surfaces of the left nasal cavity portion 41a and the right nasal cavity portion 41b are formed from the internal body surface mask 57a as described in the first exemplary embodiment, and the shapes of the left nasal cavity portion 41a and the right nasal cavity portion 41b are formed from the shape holding structure that simulates, for example, the superior nasal concha, the middle nasal concha, and the inferior nasal concha.

The second exemplary embodiment further includes a left nasal-cavity deforming mechanism 81a and a right nasal-cavity deforming mechanism 81b.

The left nasal-cavity deforming mechanism 81a lies between the nasal-septum plate portion 80 on the side of the left nasal cavity portion 41a and the internal body surface of the left nasal cavity portion 41a, and displaces the internal body surface of the left nasal cavity portion 41a to narrow the left nasal cavity portion 41a.

The right nasal-cavity deforming mechanism 81b lies between the nasal-septum plate portion 80 on the side of the right nasal cavity portion 41b and the internal body surface of the right nasal cavity portion 41b, and displaces the internal body surface of the right nasal cavity portion 41b to narrow the right nasal cavity portion 41b.

The left nasal-cavity deforming mechanism 81a and the right nasal-cavity deforming mechanism 81b are, for example, bag bodies (air bags) that inflate and deflate through input/output of air and so on. In addition, the left nasal-cavity deforming mechanism 81a and the right nasal-cavity deforming mechanism 81b may be formed of a cylinder and a rod that performs reciprocating motion with respect to the cylinder, or may be achieved with other methods. The structure of each of the left nasal-cavity deforming mechanism 81a and the right nasal-cavity deforming mechanism 81b is not limited to a particular structure.

The motion of each of the left nasal-cavity deforming mechanism 81a and the right nasal-cavity deforming mechanism 81b can be performed in an automated manner with the controller 7 causing the power source 6 to operate. For example, upon detection of a user operation made to the input-output panel 5, the controller 7 causes the power source 6 to operate to actuate the left nasal-cavity deforming mechanism 81a and the right nasal-cavity deforming mechanism 81b, enabling either one of or both of the left nasal cavity portion 41a and the right nasal cavity portion 41b to be narrowed or return to the original state.

Some people have either one of the left nasal cavity portion 41a and the right nasal cavity portion 41b narrowed due to deviation of the nasal septum. In the case where nasal endoscope or nasal intubation is applied to such people, a doctor selects a left or right nasal cavity on the basis of the degree of easiness in the procedure.

The second exemplary embodiment actuates either one of the left nasal-cavity deforming mechanism 81a and the right nasal-cavity deforming mechanism 81b to reproduce the deviation of the nasal septum, enabling either one of the left nasal cavity portion 41a and the right nasal cavity portion 41b to be narrowed. Needless to say, by returning the left nasal-cavity deforming mechanism 81a and the right nasal-cavity deforming mechanism 81b to the original state, it may be possible to return the displacement of the internal body surfaces of the left nasal cavity portion 41a and the right nasal cavity portion 41b to the original state, whereby the deviated nasal septum can be returned to the non-deviated state.

In this manner, it is possible to faithfully reproduce various states of nasal cavity of various types of people, which makes it possible to provide a highly precise training that is close to actual practices.

### [Modification Example]

The exemplary embodiments described above are merely examples of the medical simulator 1. The medical simulator 1 does not need to have all the configurations described above, and may have part of the configurations.

For example, in order to achieve a training for at least the intubation procedure, the medical simulator 1 may include a human body model 10 that simulates a human-body external shape from a head to a neck, an oral cavity portion 42, a nasal cavity portion 41, a pharynx portion 43, a larynx portion 47, a trachea portion 45, and an esophagus portion 44. In other words, the external shape of the human body model 10 may not include the chest or the belly, and the human body model 10 may not include the bronchus or the stomach.

It is only necessary that the medical simulator 1 includes: a simulated tongue portion 51 that is provided in the oral cavity portion 42 of the human body model 10 and has flexibility; a tongue changing mechanism that is provided inside the simulated tongue portion 51 and deforms or displaces the simulated tongue portion 51; and a controller 7 that controls the tongue changing mechanism. In addition, it is only necessary that the tongue changing mechanism includes a first pushing mechanism (tongue pushing mechanism 65 in Fig. 4) that pushes the simulated tongue portion 51 backward from the inner side to displace the surface of the lingual radix of the simulated tongue portion 51 backward. Moreover, it is only necessary that, in response to a predetermined trigger, the controller 7 controls the pushing motion of the first pushing mechanism. The human body model 10 may not include other configurations illustrated in Fig. 4 such as the tongue pushing mechanism 63, the upper teeth structure body 46a, and the lower teeth structure body 46b. Furthermore, the human body model 10 may not include the frameworks or actuators that move the head or lower jaw illustrated in Fig. 2 and Fig. 3.

Even with such a simple configuration, control by the controller 7 causes the surface of the lingual radix of the simulated tongue portion 51, provided in the oral cavity portion 42 of the human body model 10, to displace backward in response to the predetermined trigger. Thus, it is possible to faithfully reproduce states of the body of a patient who is, for example, under anesthesia or at the time of pharyngeal reflex.

Furthermore, the medical simulator 1 may only include the constituent elements added in the second exemplary embodiment. For example, it is only necessary that the medical simulator 1 includes neck supporting portions (the left neck supporting plate 11a and the right neck supporting plate 11b) that serve as a framework of the neck of the human body model 10 and are provided so as to extend to the head, and the simulated thyroid cartilage portion 85 that is connected by the first spring member (left supporting spring portion 86a) to the neck supporting portion and is disposed in the larynx portion of the human body model 10. In this case, it is only necessary that: the esophagus portion 44 and the trachea portion 45 of the human body model 10 are formed of tubular members (the internal body surface masks 57a and 57b) having flexibility; and the simulated thyroid cartilage portion 85 is made of a material harder than these tubular members, and has, inside thereof, the esophagus passageway portion 89 through which the tubular member of the esophagus portion 44 is inserted and passes, and the trachea passageway portion 88 through which the tubular member of the trachea portion 45 is inserted and passes.

As another example, it may be possible to employ a configuration in which the medical simulator 1 does not have the first spring member (left supporting spring portion 86a) or the neck supporting portion (the left neck supporting plate 11a and the right neck supporting plate 11b), and includes a simulated thyroid cartilage portion 85 disposed in the larynx portion of the human body model 10 of the human body model 10. In this case, it is only necessity that the esophagus portion 44 and the trachea portion 45 of the human body model 10 are formed of tubular members (internal body surface masks 57a and 57b) having flexibility. In addition, it is only necessary that the simulated thyroid cartilage portion 85 includes: the esophagus passageway portion 89 through which the tubular member of the esophagus portion 44 is inserted and passes; the trachea passageway portion 88 through which the tubular member of the trachea portion 45 is inserted and passes; the trachea-side cartilage portion 90 disposed on the forward side of the human body model 10 to form at least part of the trachea passageway portion 88; the esophagus-side cartilage portion 91 disposed on the backward side of the human body model 10 to form at least part of the esophagus passageway portion 89; the second spring member (separation spring portion 105) that applies urging force in a direction in which the trachea-side cartilage portion 90 and the esophagus-side cartilage portion 91 are pulled toward each other or in a direction in which they are spaced apart from each other; and the reaction-force applying member (cartilage wire 108) that applies, to the trachea-side cartilage portion 90 or esophagus-side cartilage portion 91, reaction force to the urging force of the second spring member, and the simulated thyroid cartilage portion 85 is configured such that the transverse cross-sectional area of at least part of the esophagus passageway portion 89 changes according to whether the trachea-side cartilage portion 90 and the esophagus-side cartilage portion 91 move toward each other or away from each other.

The surface of the lingual radix displaces backward, for example, under anesthesia or at the time of pharyngeal reflex. Thus, it is only necessary that the controller 7 controls the first pushing mechanism, for example, in response to the predetermined trigger corresponding to "under anesthesia," or the predetermined trigger corresponding to "pharyngeal reflex." As for the predetermined trigger for the control of the first pushing mechanism, any trigger may be used, which includes, for example, detection of a user operation to the input-output panel 5, detection by each of sensors, and recognition of voice of a user.

The medical simulator 1 having such a configuration can also reproduce at least states of the lingual radix portion under anesthesia or at the time of pharyngeal reflex, and hence, can provide a highly precise training that is close to actual practices in terms of medical procedures such as an intubation procedure, as compared with simulators that only simulate the human-body external shape and organs.

Furthermore, it is possible to reproduce states under anesthesia where muscles and so on are loosened. In this case, it is only necessary that, in response to the predetermined trigger corresponding to "under anesthesia," the controller 7 causes at least one of the actuators that the human body model 10 include, to be in a no-load state. More specifically, in response to the predetermined trigger corresponding to "under anesthesia," the controller 7 can cause all or one or more of the left neck cylinder 12a, the right neck cylinder 12b, the lower jaw cylinder 29, and the cartilage actuator 110 to be in a no-load state.

Here, the "actuator being in a no-load state" means a state where, if an actuator receives external power when not outputting any power, the actuator does not apply any load against the external power as reaction force. For example, in the case where the actuator is an air cylinder, the air cylinder can be in the no-load state by removing compressed air from the inside of the air cylinder. Alternatively, the method for causing the actuator to be in the no-load state may include disengaging a part of link that transfers power from an actuator.

As described above, by causing at least one actuator to be in the no-load state in response to the predetermined trigger corresponding to "under anesthesia," it is possible to faithfully reproduce the state under anesthesia where muscles and so on are loosened, and it is possible to provide a highly precise training that is close to actual practices.

Furthermore, the reproduced states of the body of a patient in the medical field are not limited to the examples described above, and it may be possible to reproduce other states. For example, it may be possible to reproduce limitation in mouth opening or limitation in range of motion of a head.

In the case of the mouth opening limitation, opening of a mouth is limited. In each of the exemplary embodiments, the mouth opening limitation can be reproduced by limiting the range of rotating motion of the lower-jaw bone portion 17. For example, it may be possible to manually or automatically (through control by the controller 7) actuate a mechanism (for example, a pin, which is not illustrated) that limits the range of rotation of the lower-jaw bone portion 17 or lower jaw link 26, or limits the slidable range of the lower jaw rod 27. Alternatively, it may be possible to limit the slidable range of the piston in the lower jaw cylinder 29 through control by the controller 7.

A mechanism (for example, a pin, which is not illustrated) that limits the rotatable range of the upper-jaw supporting plate 18 in the upward direction may be provided to reproduce the limitation in the range of motion of the head. In this case, this mechanism can be actuated manually or automatically (through control by the controller 7).

As described above, the exemplary embodiments described above are given only as examples of the medical simulator 1. Thus, needless to say, the structures for achieving the leaning motion of the head and the open-close motion of the mouth are not limited to the examples in each of the exemplary embodiments described above. For this reason, the relationship of the sliding direction of the lower jaw rod 27 relative to the open-close motion of the mouth may be reversed from the exemplary embodiments described above. More specifically, it may be possible to employ a structure in which the mouth opens with the lower jaw rod 27 sliding backward whereas the mouth closes with the lower jaw rod 27 sliding forward. In this case, it may be possible that a rod and a cylinder are provided as a mechanism for limiting the opening of the mouth, and the range of the lower jaw rod 27 sliding backward (moving into the lower jaw cylinder 29) is limited with the rod extending and retracting. In addition, the left shoulder cylinder 12a and the right shoulder cylinder 12b are configured such that two cylinders are arranged in a vertical direction (one above the other). In this case, the range of the head may be limited with the rods of these cylinders extending and retracting.

Details of the exemplary embodiments described above may also be identified in the following manner.

### (Supplemental Note 1)

A medical simulator that has a human body model that simulates a human-body external shape at least from a head to a neck, an oral cavity portion, a nasal cavity portion, a pharynx portion, a larynx portion, a trachea portion, and an esophagus portion, thereby enabling at least training of an intubation procedure to be done, the medical simulator including:
a simulated thyroid cartilage portion that is disposed in the larynx portion of the human body model, in which
the esophagus portion of the human body model includes a tubular member having flexibility,
the trachea portion of the human body model includes a tubular member having flexibility,
the simulated thyroid cartilage portion includes:
   an esophagus passageway portion into which the tubular member of the esophagus portion is inserted;
   a trachea passageway portion into which the tubular member of the trachea portion is inserted;
   a trachea-side cartilage portion that is disposed on the forward side of the human body model to form at least part of the trachea passageway portion;
   an esophagus-side cartilage portion that is disposed on the backward side of the human body model to form at least part of the esophagus passageway portion;
   a second spring member that applies urging force in a direction in which the trachea-side cartilage portion and the esophagus-side cartilage portion are pulled toward each other or in a direction in which the trachea-side cartilage portion and the esophagus-side cartilage portion are spaced apart from each other; and
   a reaction-force applying member that applies, to the trachea-side cartilage portion or the esophagus-side cartilage portion, reaction force associated with the urging force of the second spring member, and
a transverse cross-sectional area of at least part of the esophagus passageway portion changes in accordance with the trachea-side cartilage portion and the esophagus-side cartilage portion moving toward each other or away from each other.

### (Supplemental Note 2)

The medical simulator according to Supplemental Note 2, further including:
an actuator that outputs power used as the reaction force;
a simulated tongue portion that is provided in the oral cavity portion of the human body model and has flexibility;
a first sensor that detects pressure on a surface of the pharynx portion of the human body model or pressure on a surface of a lingual radix of the simulated tongue portion; and
a controller that, in response to detection of pressure by the first sensor or a predetermined trigger corresponding to pharyngeal reflex or swallowing reflex, causes the actuator to operate to move the trachea-side cartilage portion and the esophagus-side cartilage portion toward each other or away from each other, thereby increasing the transverse cross-sectional area of at least part of the esophagus passageway portion.

### (Supplemental Note 3)

A medical simulator that has a human body model that simulates a human-body external shape at least from a head to a neck, an oral cavity portion, a nasal cavity portion, a pharynx portion, a larynx portion, a trachea portion, and an esophagus portion, thereby enabling at least training of an intubation procedure to be done, the medical simulator including:
a nasal-septum plate portion that simulates a nasal septum, and separates the nasal cavity portion of the human body model into a left nasal cavity portion and a right nasal cavity portion;
a left nasal-cavity deforming mechanism that lies between the nasal-septum plate portion on a side of the left nasal cavity portion and a surface of the left nasal cavity portion, and displaces this surface to narrow the left nasal cavity portion; and
a right nasal-cavity deforming mechanism that lies between the nasal-septum plate portion on a side of the right nasal cavity portion and a surface of the right nasal cavity portion, and displaces this surface to narrow the right nasal cavity portion.

### (Supplemental Note 4)

A medical simulator that has a human body model that simulates a human-body external shape at least from a head to a neck, an oral cavity portion, a nasal cavity portion, a pharynx portion, a larynx portion, a trachea portion, and an esophagus portion, thereby enabling at least training of an intubation procedure to be done, the medical simulator including:
a simulated tongue portion that is provided in the oral cavity portion of the human body model and has flexibility;
a tongue changing mechanism that is provided inside the simulated tongue portion, and deforms or displaces the simulated tongue portion; and
a controller that controls the tongue changing mechanism, in which
the tongue changing mechanism includes
   a first pushing mechanism that pushes the simulated tongue portion backward from the inner side to displace the surface of a lingual radix of the simulated tongue portion backward, and
the controller controls pushing motion of the first pushing mechanism in response to a predetermined trigger.

### (Supplemental Note 5)

The medical simulator according to Supplemental Note 4, further including:
a third pushing mechanism that is disposed on the back side of the surface of the esophagus portion of the human body model, and pushes to displace the surface of the esophagus portion forward, in which
in response to a predetermined trigger corresponding to under anesthesia, the controller causes the first pushing mechanism and the third pushing mechanism to push to move the surface of the lingual radix of the simulated tongue portion backward, and to narrow the esophagus portion of the human body model.

### (Supplemental Note 6)

The medical simulator according to Supplemental Note 4 or 5, further including:
a first sensor that detects pressure on a surface of the pharynx portion of the human body model or pressure on a surface of the lingual radix of the simulated tongue portion; and
an audio output portion that outputs a nausea sound, in which
in response to detection of pressure by the first sensor, the controller causes the first pushing mechanism to push to displace the surface of the lingual radix of the simulated tongue portion backward, and causes the audio output portion to output the nausea sound.

## Claims

1. A medical simulator that has a human body model that simulates a human-body external shape at least from a head to a neck, an oral cavity portion, a nasal cavity portion, a pharynx portion, a larynx portion, a trachea portion, and an esophagus portion, thereby enabling at least training of an intubation procedure to be done, the medical simulator comprising:
a neck supporting portion that serves as a framework of the neck of the human body model and is provided so as to extend to the head; and
a simulated thyroid cartilage portion that is connected by a first spring member to the neck supporting portion and is disposed in the larynx portion of the human body model, wherein
the esophagus portion of the human body model includes a tubular member having flexibility,
the trachea portion of the human body model includes a tubular member having flexibility, and
the simulated thyroid cartilage portion is made of a material harder than that of the tubular member, and has, inside thereof, an esophagus passageway portion into which the tubular member of the esophagus portion is inserted and a trachea passageway portion into which the tubular member of the trachea portion is inserted.

2. The medical simulator according to claim 1, further comprising:
a first actuator that applies power to the simulated thyroid cartilage portion, wherein
the simulated thyroid cartilage portion further includes:
a passageway deforming mechanism that changes a transverse cross-sectional area of at least part of the esophagus passageway portion using the power from the first actuator.

3. The medical simulator according to claim 2, wherein
the simulated thyroid cartilage portion includes:
a trachea-side cartilage portion that is disposed on a forward side of the human body model;
an esophagus-side cartilage portion that is disposed on a backward side of the trachea-side cartilage portion;
a second spring member that applies urging force in a direction in which the trachea-side cartilage portion and the esophagus-side cartilage portion are pulled toward each other or in a direction in which the trachea-side cartilage portion and the esophagus-side cartilage portion are spaced apart from each other; and
a reaction-force applying member that applies, to the trachea-side cartilage portion or the esophagus-side cartilage portion, reaction force associated with the urging force of the second spring member, and
the trachea-side cartilage portion and the esophagus-side cartilage portion move toward each other or away from each other using the power from the first actuator as the reaction force to change a transverse cross-sectional area of at least part of the esophagus passageway portion.

4. The medical simulator according to claim 3, wherein
the urging direction of the second spring member is a diagonally upward direction or diagonally downward direction with respect to a anteroposterior direction of the human body model.

5. The medical simulator according to any one of claims 2 to 4, further comprising:
a first sensor that detects pressure on a surface of the pharynx portion of the human body model or pressure on a surface of a lingual radix of the simulated tongue portion; and
a controller that controls the first actuator, wherein
in response to detection of pressure by the first sensor, or a predetermined trigger corresponding to pharyngeal reflex or swallowing reflex, the controller causes the first actuator to operate to increase the transverse cross-sectional area of at least part of the esophagus passageway portion.

6. The medical simulator according to claim 5, further comprising:
an upper-jaw bone portion and a lower-jaw bone portion that are provided in the head of the human body model;
an upper-jaw supporting portion that is provided so as to extend in the anteroposterior direction, and supports the upper-jaw bone portion;
a lower-jaw supporting portion that moves in association with the upper-jaw supporting portion, and supports the lower-jaw bone portion;
a second actuator that rotates the upper-jaw supporting portion around a rotating axis disposed more backward than a rotating axis of the lower-jaw bone portion; and
an audio output portion that outputs a predetermined sound, wherein
in response to a predetermined trigger, the controller causes the second actuator to rotate the upper-jaw supporting portion, and also causes the audio output portion to output the predetermined sound.

7. The medical simulator according to claim 6, further comprising:
a third actuator that applies power to the lower-jaw supporting portion, wherein
the lower-jaw supporting portion includes a rotating mechanism for rotatably supporting the lower-jaw bone portion and rotating the lower-jaw bone portion, and
in response to a predetermined trigger, the controller further causes the third actuator to rotate the lower-jaw bone portion through the rotating mechanism of the lower-jaw supporting portion to open a mouth of the human body model.

8. The medical simulator according to claim 6 or 7, further comprising:
a second sensor that detects pressure on a surface of the larynx portion or the trachea portion of the human body model, wherein
in response to detection of pressure by the first sensor, the controller causes the audio output portion to output a nausea sound as the predetermined sound, and
in response to detection of pressure by the second sensor, the controller causes the audio output portion to output a coughing sound as the predetermined sound.

9. The medical simulator according to claim 7 or 8, wherein
in response to a predetermined trigger corresponding to under anesthesia, the controller causes one or more actuators including the first actuator, the second actuator, or the third actuator to be in a non-load state.

10. The medical simulator according to any one of claims 5 to 9, comprising:
a simulated tongue portion that is provided in the oral cavity portion of the human body model and has flexibility; and
a tongue changing mechanism that is provided inside the simulated tongue portion, and deforms or displaces the simulated tongue portion, wherein
the tongue changing mechanism includes:
a first pushing mechanism that pushes the simulated tongue portion backward from an inner side to displace the surface of the lingual radix of the simulated tongue portion backward, and
the controller controls pushing motion of the first pushing mechanism in response to a predetermined trigger.

11. The medical simulator according to claim 10, further comprising:
a simulated epiglottis that is formed integrally with the simulated tongue portion and has flexibility, wherein
the tongue changing mechanism further comprises:
a second pushing mechanism that pushes the simulated tongue portion upward from an inner side to displace an upper-side surface of the simulated tongue portion upward, and
in response to a predetermined trigger corresponding to swallowing reflex, the controller causes the second pushing mechanism to push the simulated tongue portion upward from an inner side and causes the simulated epiglottis to hang down.

12. The medical simulator according to any one of claims 1 to 11, further comprising:
a nasal-septum plate portion that simulates a nasal septum, and separates the nasal cavity portion of the human body model into a left nasal cavity portion and a right nasal cavity portion;
a left nasal-cavity deforming mechanism that lies between the nasal-septum plate portion on a side of the left nasal cavity portion and a surface of the left nasal cavity portion, and displaces this surface to narrow the left nasal cavity portion; and
a right nasal-cavity deforming mechanism that lies between the nasal-septum plate portion on a side of the right nasal cavity portion and a surface of the right nasal cavity portion, and displaces this surface to narrow the right nasal cavity portion.

13. The medical simulator according to any one of claims 1 to 12, further comprising:
two types of head masks that simulate an external body surface of a head of a human body and have different degrees of expansion and contraction, wherein
the two types of head masks are formed detachably on the head of the human body model so that the masks switch according to under anesthesia or not under anesthesia.
